# EUROPEAN PATENT APPLICATION

(11) **EP 4 510 694 A1**
(43) Date of publication of application: **19.02.2025**
(21) Application number: 23799102.1
(22) Date of filing: 20.02.2023
(51) Int. Cl.: H04W 28/02

(54) **COMMUNICATION METHOD AND APPARATUS**

(30) Priority: 06.05.2022 CN 202210488467
(71) Applicant: Huawei Technologies Co., Ltd., Shenzhen, Guangdong 518129 (CN)
(72) Inventor: SUN, Haiyang, Shenzhen, Guangdong 518129 (CN); ZHU, Fangyuan, Shenzhen, Guangdong 518129 (CN); XU, Shengfeng, Shenzhen, Guangdong 518129 (CN)
(74) Representative: Isarpatent
(86) International application number: PCT/CN2023/077195
(87) International publication number: WO 2023/213112

(57) **Abstract**

A communication method and an apparatus are provided. The method includes: When an access and mobility management function network element determines that a protocol data unit PDU session status of a terminal device does not meet a first condition (where the first condition in this application is a condition related to the PDU session status of the terminal device) of a network slice after first time expires, it is determined to reject access of the terminal device to the network slice, so that a PDU session resource in the network slice can be properly configured and used.

## Description

This application claims priority to Chinese Patent Application No. 202210488467.X, filed with the China National Intellectual Property Administration on May 6, 2022 and entitled "COMMUNICATION METHOD AND APPARATUS", which is incorporated herein by reference in its entirety.

### TECHNICAL FIELD

Embodiments of this application relate to the communication field, and more specifically, to a communication method and an apparatus.

### BACKGROUND

A core network (for example, a network slice) limits a quantity of accessed terminal devices. For example, a network slice admission control function (network slice admission control function, NSACF) network element may monitor a quantity of accessed terminal devices in each network slice. Currently, the following scenario may occur: A large quantity of terminal devices may request to access a network slice, but corresponding protocol data unit (protocol data unit, PDU) sessions may not be established. When another terminal device that has not accessed the network slice indeed needs to establish a PDU session, the NSACF may reject access of the terminal device to the network slice due to a limitation on a quantity of accessed terminal devices in the network slice. Consequently, a PDU session resource cannot be properly configured and used, and service experience of a user is deteriorated.

Therefore, for the foregoing scenario, how the terminal device more effectively configures and uses a PDU session resource in the network becomes a technical problem that needs to be resolved.

### SUMMARY

Embodiments of this application provide a communication method and an apparatus. When an access and mobility management function network element determines that a protocol data unit PDU session status of a terminal device does not meet a first condition (where the first condition in this application is a condition related to the PDU session status of the terminal device) of a network slice after first time expires, it is determined to reject access of the terminal device to the network slice, so that a PDU session resource in the network slice can be properly configured and used.

According to a first aspect, a communication method is provided. The method may be performed by an access and mobility management function network element, or may be performed by a component (for example, a chip or a circuit) of an access and mobility management function network element. This is not limited.

The method includes: The access and mobility management function network element determines first time. If a protocol data unit PDU session status of a terminal device does not meet a first condition of a network slice after the first time expires, the access and mobility management function network element rejects access of the terminal device to the network slice. The first condition includes at least one of the following: there is a PDU session established by the terminal device for the network slice; there is an activated user plane in a PDU session established by the terminal device for the network slice; or there is data of a first service transmitting in a PDU session established by the terminal device for the network slice.

The foregoing technical solution may also be understood as follows: The access and mobility management function network element starts a timer, and duration of the timer is the first time. After the timer expires, the access and mobility management function network element determines whether the first condition is met. The first condition includes at least one of the following: There is a PDU session established by the terminal device for a first network slice; there is an activated user plane in a PDU session established by the terminal device for a first network slice; or there is data of the first service transmitting in a PDU session established by the terminal device for the first network slice. If a determining result of the access and mobility management function network element is that the first condition is not met, the access and mobility management function network element rejects access of the terminal device to the first network slice.

A moment at which the access and mobility management function network element starts the timer may be, for example, a moment at which the access and mobility management function network element receives a message indicating that the terminal device requests to access the network slice. In this case, after the timer expires, the access and mobility management function network element may determine whether the terminal device establishes the PDU session for the network slice, whether there is an activated user plane in the PDU session established for the network slice, or whether there is data of the first service transmitting in the PDU session established for the network slice.

For another example, the moment at which the timer is started may be a moment at which the access and mobility management function network element senses that the terminal device releases one of the PDU sessions (for example, a PDU session #12) established for the network slice. In this case, after the timer expires, the access and mobility management function network element may determine whether the terminal device establishes the PDU session for the network slice, whether there is an activated user plane in the PDU session established for the network slice, or whether there is data of the first service transmitting in the PDU session established for the network slice.

For still another example, the moment at which the timer is started may be a moment at which the access and mobility management function network element senses that the terminal device completes establishment of one PDU session (for example, a PDU session #1) for the network slice for the first time (in this scenario, the first condition may be: there is an activated user plane in the PDU session established by the terminal device for the network slice, or there is data of the first service transmitting in the PDU session established by the terminal device for the network slice). In this case, after the timer expires, the access and mobility management function network element may determine whether there is an activated user plane in the PDU session established for the network slice, or whether there is data of the first service transmitting in the PDU session established for the network slice.

For example, the moment at which the timer is started may be a moment at which the access and mobility management function network element senses a deactivated user plane in the PDU session established by the terminal device for the network slice (in this scenario, the first condition may be: there is an activated user plane in the PDU session established by the terminal device for the network slice, or there is data of the first service transmitting in the PDU session established by the terminal device for the network slice). In this case, after the timer expires, the access and mobility management function network element may determine whether there is an activated user plane in the PDU session established for the network slice, or whether there is data of the first service transmitting in the PDU session established for the network slice.

For another example, the moment at which the timer is started may be a moment at which the access and mobility management function network element determines that the first service ends (for example, a moment at which the access and mobility management function network element may determine, based on subscribed end time of the first service, that the first service ends) (in this scenario, the first condition may be: there is an activated user plane in the PDU session established by the terminal device for the network slice, or there is data of the first service transmitting in the PDU session established by the terminal device for the network slice). In this case, after the timer expires, the access and mobility management function network element may determine whether there is an activated user plane in the PDU session established for the network slice, or whether there is data of the first service transmitting in the PDU session established for the network slice.

The method may alternatively be understood as that, if a PDU session status of the terminal device meets the first condition of the network slice before the first time expires, the access and mobility management function network element allows the terminal device to access the network slice.

In this application, the first condition may alternatively include at least one of the following: There is no PDU session established by the terminal device for the network slice; there is no activated user plane in a PDU session established by the terminal device for the network slice; or there is no data of the first service transmitting in the PDU session established by the terminal device for the network slice. The method may alternatively be understood as that, if the PDU session status of the terminal device meets the first condition of the network slice after the first time expires, the access and mobility management function network element rejects the access of the terminal device to the network slice.

It should be noted that the "first condition" in this application may be a condition that is related to whether the terminal device establishes a PDU session for the network slice and a status of an established PDU session. This is not limited to the conditions listed in this application.

In this application, the "first time" may be understood, for example, as a time period. For another example, the "first time" may be a time unit. For example, the "time unit" may be one or more radio frames, one or more subframes, one or more slots, one or more mini-slots, or one or more symbols. The symbol may be an orthogonal frequency division multiplexing (orthogonal frequency division multiplexing, OFDM) symbol, a discrete Fourier transform spread spectrum orthogonal frequency division multiplexing (discrete Fourier transform spread spectrum orthogonal frequency division multiplexing, DFT-S-OFDM) symbol, or the like. For example, the first time may alternatively be 1 second (second, "s" for short) or a plurality of seconds, 1 millisecond (millisecond, "ms" for short) or a plurality of milliseconds.

In this application, a plurality of terminal devices may be allowed to access one network slice, and each accessed terminal device may establish a plurality of PDU sessions for the network slice. In this application, that "there is a PDU session established by the terminal device for the network slice" in the first condition may be understood as that the first condition may be met as long as any PDU session is established by the terminal device for the network slice. Similarly, that "there is an activated user plane in a PDU session established by the terminal device for the network slice" may alternatively be understood as that there is an activated user plane in any PDU session established by the terminal device for the network slice, in other words, the first condition may be met. That "there is data of the first service transmitting in a PDU session established by the terminal device for the network slice" may be understood as that there is the data of a first service transmitting in any PDU session established by the terminal device for the network slice, in other words, the first condition may be met.

In this application, that "there is an activated user plane in an established PDU session" may be understood as that there is data transmission in the established PDU session.

The "first service" in this application may be any one of a plurality of data transmission services of the terminal device, or may be a specific service (which may also be understood as a specific application) of a plurality of data transmission services of the terminal device. This is not limited.

In this application, the access and mobility management function network element may subscribe to a start event or end time of the first service from a session management function network element or a policy control management network element.

Based on the foregoing technical solutions, in this application, the access and mobility management function network element may determine, based on the first time and the first condition (to be specific, if the access and mobility management function network element determines that the PDU session status of the terminal device does not meet the first condition of the network slice after the first time expires), to reject the access of the terminal device to the network slice. Therefore, it is ensured that no terminal device accesses the network slice for a long period of time without establishing/activating a PDU session, to improve usage efficiency of a PDU session resource in the network slice, and improve service experience of a user.

In a possible implementation, the method further includes: The access and mobility management function network element obtains information indicating the first time.

For example, the access and mobility management function network element may obtain, from an NSACF, the information indicating the first time, the access and mobility management function network element may obtain, from a UDM, the information indicating the first time, the access and mobility management function network element may preconfigure the information indicating the first time, or the like. This is not limited.

Based on the foregoing technical solutions, in this application, the access and mobility management function network element may obtain, in a plurality of manners, the information indicating the first time, to enable a manner of determining the first time by the access and mobility management function network element to be more flexible.

In a possible implementation, the method further includes: The access and mobility management function network element obtains attribute information of the network slice, and the access and mobility management function network element determines the first condition based on the attribute information.

In a possible implementation, the attribute information includes at least one of the following: After the first time expires, if there is no PDU session established by the terminal device for the network slice, the access and mobility management function network element rejects the access of the terminal device to the network slice; after the first time expires, if there is no activated user plane in the PDU session established by the terminal device for the network slice, the access and mobility management function network element rejects the access of the terminal device to the network slice; or after the first time expires, if there is no data of the first service transmitting in the PDU session established by the terminal device for the network slice, the access and mobility management function network element rejects the access of the terminal device to the network slice.

In a possible implementation, the attribute information of the network slice may include at least one of the following: Before the first time expires, if there is a PDU session established by the terminal device for the network slice, the terminal device is allowed to access the network slice; before the first time expires, if there is an activated user plane in the PDU session established by the terminal device for the network slice, the access and mobility management function network element allows the terminal device to access the network slice; or before the first time expires, if there is data of the first service transmitting in the PDU session established by the terminal device for the network slice, the access and mobility management function network element allows the terminal device to access the network slice.

Based on the foregoing technical solutions, in this application, the access and mobility management function network element may determine the first condition based on the attribute information, and different attribute information corresponds to different first conditions, to enable implementation of the access and mobility management function network element to be more flexible. In addition, the access and mobility management function network element may determine, based on different attributes of the network slice, whether to reject access to the terminal device in the network slice, to be specific, to enable the access and mobility management function network element to control the terminal device that accesses the network slice more flexibly.

In a possible implementation, the method further includes: Before the access and mobility management function network element rejects the access of the terminal device to the network slice, the access and mobility management function network element sends the first time to the terminal device.

Based on the foregoing technical solutions, in this application, the terminal device is enabled to sense that, after the first time expires, if a PDU session has not been established, if there is no activated user plane in an established PDU session, or if there is no data of a first service transmitting in the established PDU session, the access of the terminal device to the network slice is rejected.

In a possible implementation, the method further includes: The access and mobility management function network element sends, to the terminal device, a cause value indicating why the access and mobility management function network element rejects the access of the terminal device to the network slice. The cause value includes at least one of the following: There is no PDU session established by the terminal device for the network slice; there is no activated user plane in a PDU session established by the terminal device for the network slice; or there is no data of a first service transmitting in a PDU session established by the terminal device for the network slice.

Based on the foregoing technical solutions, in this application, the access and mobility management function network element may send, to the terminal device, a cause value for rejecting the access of the terminal device to the network slice, so that the terminal device can learn of a reason why access to the network slice is rejected, can subsequently establish a PDU session before the first time expires, and re-request the access to the network slice.

In a possible implementation, the access and mobility management function network element receives, from the terminal device, indication information that the terminal device is to establish a PDU session. The access and mobility management function network element determines the first time based on the indication information.

For example, the indication information may be a follow on indication, and the indication information indicates that the terminal device is to establish a PDU session. In this case, the access and mobility management function network element may determine, based on the indication information, to extend the first time, reset a value of the first time to be greater than a value of initially determined first time, determine, in a plurality of preconfigured first time periods, a value of time that is greater than initially determined first time, or the like.

Based on the foregoing technical solutions, a "new PDU session status" (that is, a status of a PDU session to be established by the terminal device) is introduced in this application, so that the access and mobility management function network element may determine, based on the status of the PDU session to be established by the terminal device, not to reject the access of the terminal device to the network slice. This not only improves configuration and usage efficiency of the PDU session in the network slice, but also improves efficiency of accessing the network slice by the terminal device.

According to a second aspect, a communication method is provided. The method may be performed by a terminal device (for example, UE), or may be performed by a component (for example, a chip or a circuit) of a terminal device. This is not limited.

The method includes: The terminal device sends, to an access and mobility management function network element, information for requesting to access a network slice; the terminal device receives first time from the access and mobility management function network element; and when a protocol data unit PDU session status of the terminal device does not meet a first condition after the first time expires, the terminal device receives, from the access and mobility management function network element, information indicating that access to the network slice is rejected. The first condition includes at least one of the following: There is no PDU session established by the terminal device for the network slice; there is an activated user plane in a PDU session established by the terminal device for the network slice; or there is data of a first service transmitting in a PDU session established by the terminal device for the network slice.

Based on the foregoing technical solutions, in this application, the terminal device may send, to the access and mobility management function network element, the information for requesting to access the network slice. If the PDU session status of the terminal device does not meet an attribute of the network slice, access to the network slice is rejected. Therefore, it is ensured that no UE accesses the network slice for a long period of time without establishing/activating a PDU session, to improve usage efficiency of a PDU session resource in the network slice, and improve service experience of a user.

In a possible implementation, the method further includes: The terminal device sends, to the access and mobility management function network element, indication information that the terminal device is to establish a PDU session. The indication information is used by the access and mobility management function network element to determine the first time.

Based on the foregoing technical solutions, a "new PDU session status" (that is, a status of a PDU session to be established by the terminal device) is introduced in this application, so that the access and mobility management function network element may determine, based on the status of the PDU session to be established by the terminal device, not to reject access of the terminal device to the network slice. This not only improves configuration and usage efficiency of the PDU session in the network slice, but also improves efficiency of accessing the network slice by the terminal device.

According to a third aspect, a communication method is provided. The method may be performed by an access and mobility management function network element, or may be performed by a component (for example, a chip or a circuit) of an access and mobility management function network element. This is not limited.

In a possible implementation, the access and mobility management function network element determines attribute information of a network slice. The access and mobility management function network element determines, based on the attribute information of the network slice and a protocol data unit PDU session status of the terminal device, a quantity N of terminal devices that access the network slice this time. N is greater than or equal to 0, and is less than or equal to 1. The access and mobility management function network element sends the quantity N to a network slice admission control function network element. The attribute information of the network slice includes at least one of the following: If there is no PDU session established by the terminal device for the network slice, the access and mobility management function network element rejects access of the terminal device to the network slice; if there is no activated user plane in a PDU session established by the terminal device for the network slice, the access and mobility management function network element rejects access of the terminal device to the network slice; or if there is no data of a first service transmitting in a PDU session established by the terminal device for the network slice, the access and mobility management function network element rejects access of the terminal device to the network slice.

Based on the foregoing technical solutions, in this application, the access and mobility management function network element may set and report, based on the PDU session status and the attribute information of the network slice, the quantity of terminal devices that access the network slice this time. This can effectively avoid occupying a quota that is for the terminal device to access the network slice in the case where a terminal device requests to access the network slice but does not establish/activate a PDU session. In other words, this improves configuration and usage efficiency of a PDU session resource in the network slice, and improves service experience of a user.

In a possible implementation, that the access and mobility management function network element determines, based on the attribute information of the network slice and a PDU session status of the terminal device, a quantity N of terminal devices that access the network slice includes: If the access and mobility management function network element determines that the PDU session status of the terminal device does not conform to an attribute of the network slice, the AMF determines that N is less than 1.

Based on the foregoing technical solutions, in this application, if the access and mobility management function network element determines that the PDU session status of the terminal device does not conform to the attribute of the network slice, the AMF may set N to a real number less than 1. This avoids occupying the quota for accessing the network slice by the terminal device when the terminal device requests to access the network slice without establishing/activating a PDU session.

In a possible implementation, the method further includes: The access and mobility management function network element receives, from the terminal device, indication information that the terminal device is to establish a PDU session. In a possible implementation, that the access and mobility management function network element determines, based on the attribute information of the network slice and a PDU session status of the terminal device, a quantity N of terminal devices that access the network slice includes: The access and mobility management function network element determines, based on the attribute information of the network slice, the PDU session status of the terminal device, and the indication information, that N is greater than 0.

Based on the foregoing technical solutions, a "new PDU session status" (that is, a status of a PDU session to be established by the terminal device) is introduced in this application, so that the access and mobility management function network element may determine, based on the status of the PDU session to be established by the terminal device, not to reject access of the terminal device to the network slice. This not only improves configuration and usage efficiency of the PDU session in the network slice, but also improves efficiency of accessing the network slice by the terminal device.

According to a fourth aspect, a communication method is provided. The method may be performed by a network slice admission control function network element, or may be performed by a component (for example, a chip or a circuit) of a network slice admission control function network element. This is not limited.

The method includes: The network slice admission control function network element obtains a protocol data unit PDU session status of a terminal device. Attribute information of a network slice is configured on the network slice admission control function network element. The network slice admission control function network element determines, based on the PDU session status of the terminal device and/or the attribute information of the network slice, whether to trigger an access and mobility management function network element to reject access of the terminal device to the network slice. The attribute information of the network slice includes at least one of the following: If there is no PDU session established by the terminal device for the network slice, the access and mobility management function network element rejects the access of the terminal device to the network slice; if there is no activated user plane in a PDU session established by the terminal device for the network slice, the access and mobility management function network element rejects the access of the terminal device to the network slice; or if there is no data of a first service transmitting in a PDU session established by the terminal device for the network slice, the access and mobility management function network element rejects the access of the terminal device to the network slice.

Based on the foregoing technical solutions, in this application, the network slice admission control function network element may reject, based on the obtained PDU session status, the access of the terminal device to the network slice when determining that the PDU session status of the terminal device does not meet an attribute of the network slice. Therefore, it is ensured that no terminal device registers for a long period of time without establishing/activating a PDU session, to improve usage efficiency of a PDU session resource in the network slice, and improve service experience of user equipment.

In a possible implementation, that the network slice admission control function network element obtains a PDU session status of a terminal device includes: The network slice admission control function network element obtains the PDU session status of the terminal device from the access and mobility management function network element; the network slice admission control function network element obtains the PDU session status of the terminal device from a session management function network element via the access and mobility management function network element; or the network slice admission control function network element obtains the PDU session status of the terminal device from a network exposure function network element.

In a possible implementation, the network slice admission control function network element is a first network slice admission control function network element, and that the network slice admission control function network element obtains a PDU session status of a terminal device includes: The first network slice admission control function network element obtains address information of a second network slice admission control function network element. The first network slice admission control function network element is configured to manage a quantity of terminal devices, and the second network slice admission control function network element is configured to manage a quantity of PDU sessions. The first network slice admission control function network element requests to obtain the PDU session status of the terminal device from the second network slice admission control function network element based on the address information of the second network slice admission control function network element. The first network slice admission control function network element receives the PDU session status of the terminal device from the second network slice admission control function network element.

In a possible implementation, that the first network slice admission control function network element obtains address information of a second network slice admission control function network element includes: The first network slice admission control function network element requests or subscribes to the address information of the second network slice admission control function network element from the access and mobility management function network element. The first network slice admission control function network element receives the address information of the second network slice admission control function network element from the access and mobility management function network element.

Based on the foregoing technical solutions, in this application, the network slice admission control function network element may flexibly obtain the PDU session status of the terminal device in a plurality of manners.

In a possible implementation, that the network slice admission control function network element determines, based on the PDU session status of the terminal device and the attribute information of the network slice, whether to trigger an access and mobility management function network element to reject access of the terminal device to the network slice includes: When the PDU session status of the terminal device does not meet the attribute of the network slice, the network slice admission control function network element determines to trigger the access and mobility management function network element to reject the access of the terminal device to the network slice.

Based on the foregoing technical solutions, in this application, the network slice admission control function network element determines that the PDU session status of the terminal device does not meet the attribute of the network slice, so that the network slice admission control function network element may reject the access of the terminal device to the network slice, to improve usage efficiency of a PDU session resource, and improve service experience of user equipment.

In a possible implementation, the method further includes: The network slice admission control function network element receives, from the access and mobility management function network element, indication information that the terminal device is to establish a PDU session. That the network slice admission control function network element determines, based on the PDU session status of the terminal device and the attribute information of the network slice, whether to trigger an access and mobility management function network element to reject access of the terminal device to the network slice includes: When the PDU session status of the terminal device does not meet the attribute of the network slice, the network slice admission control function network element determines, based on the indication information, not to trigger the access and mobility management function network element to reject the access of the terminal device to the network slice.

Based on the foregoing technical solutions, in this application, the access and mobility management function network element may determine, based on a status of the PDU session to be established by the terminal device, not to reject the access of the terminal device to the network slice. This not only improves configuration and usage efficiency of the PDU session in the network slice, but also improves efficiency of accessing the network slice by the terminal device.

In a possible implementation, the network slice admission control function network element that manages the terminal device may update, based on a PDU session status of an accessed terminal device, a threshold of a quantity of terminal devices that are allowed to register on the network slice. For example, when there are too many terminal devices that have not established a PDU session or terminal devices that have not activated a user plane, the network slice admission control function network element may increase the threshold of the quantity of terminal devices that are allowed to register on the network slice (for example, the quantity of terminal devices that are allowed to register on the network slice is increased to 30% of a quantity of terminal devices that have not established a PDU session or a quantity of terminal devices that have not activated a user plane). Alternatively, in this case, the network slice admission control function network element that manages the terminal device may not change the threshold, however, a quantity of terminal devices that are allowed to access exceeds the threshold of the quantity of terminal devices that are allowed to register on the network slice (for example, may exceed at most 30% of the quantity of terminal devices that have not established a PDU session or the quantity of terminal devices that have not activated a user plane). Further, if a quantity of actually registered terminal devices has exceeded the updated threshold, in this case, the network slice admission control function network element may notify the access and mobility management function network element that "a maximum quantity of registered terminal devices in the network slice has been reached". In this case, it may alternatively be understood that, the network slice admission control function network element that manages the terminal device may determine, based only on the PDU session status of the terminal device, whether to trigger the access and mobility management function network element to reject the access of the terminal device to the network slice.

Specifically, if the access and mobility management function network element requests to increase a quantity of terminal devices registered with S-NSSAI, and currently a maximum quantity of terminal devices that are allowed to register on the network slice has been reached, in this case, the network slice admission control function network element that manages the terminal device may reset the maximum quantity of terminal devices that are allowed to register on the network slice. For example, the network slice admission control function network element that manages the terminal device may check a PDU session status (for example, may be reported by the access and mobility management function network element), and may increase, based on the reported PDU session status of each terminal device, the quantity of terminal devices that are allowed to register on the network slice to 30% of the quantity of terminal devices that have not established a PDU session or the quantity of terminal devices that have not activated a user plane. For another example, the network slice admission control function network element that manages the terminal device may maintain a counter. The counter is used to record that a quantity of actually registered users exceeds the maximum quantity of terminal devices that are allowed to register on the network slice. If the network slice admission control function network element that manages the terminal device finds, based on the counter (or according to an operator policy), that the quantity of actually registered terminal devices exceeds the maximum quantity of terminal devices that are allowed to register on the network slice, and has reached a threshold of the quantity of terminal devices that have not established a PDU session or the quantity of terminal devices that have not activated a user plane, for example, 30%, in this case, the network slice admission control function network element that manages the terminal device may determine whether to notify the access and mobility management control function network element that "the maximum quantity of registered terminal devices on the network slice has been reached".

According to a fifth aspect, a communication method is provided. The method may be performed by a terminal device (for example, UE), or may be performed by a component (for example, a chip or a circuit) of a terminal device. This is not limited.

The method includes: The terminal device sends, to an access and mobility management function network element, information about a network slice that the terminal device requests to access. The terminal device sends, to the access and mobility management function network element, indication information that the terminal device is to establish a PDU session for the network slice. The indication information is used by the access and mobility management function network element to determine a quantity N of terminal devices that access the network slice, where N is greater than 0; or the indication information is used by a network slice admission control function network element to determine not to trigger the access and mobility management function network element to reject access of the terminal device to the network slice.

Based on the foregoing technical solutions, a "new PDU session status" (that is, a status of a PDU session to be established by the terminal device) is introduced in this application, so that the access and mobility management function network element may determine, based on the status of the PDU session to be established by the terminal device, not to reject the access of the terminal device to the network slice. This not only improves configuration and usage efficiency of the PDU session in the network slice, but also improves efficiency of accessing the network slice by the terminal device.

According to a sixth aspect, a communication apparatus is provided. The apparatus is configured to perform the method in any one of the possible implementations of the first aspect to the fifth aspect. Specifically, the apparatus may include units and/or modules configured to perform the method in any one of the possible implementations of the first aspect to the fifth aspect, for example, a transceiver unit and/or a processing unit.

In an implementation, the apparatus is a communication device (for example, an access and mobility management function network element, a terminal device, or a network slice admission control function network element). When the apparatus is a communication device, the communication unit may be a transceiver or an input/output interface. The processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, an access and mobility management function network element, a terminal device, or a network slice admission control function network element). When the apparatus is a chip, a chip system, or a circuit used in a communication device, the communication unit may be an input/output interface, an interface circuit, an output circuit, an input circuit, a pin, a related circuit, or the like on the chip, the chip system, or the circuit. The processing unit may be at least one processor, a processing circuit, a logic circuit, or the like.

According to a seventh aspect, a communication apparatus is provided. The apparatus includes at least one processor, configured to execute a computer program or instructions stored in a memory, to perform the method in any one of the possible implementations of the first aspect and the third aspect. Optionally, the apparatus further includes a memory, configured to store a computer program or instructions. Optionally, the apparatus further includes a communication interface, and the processor reads, through the communication interface, the computer program or the instructions stored in the memory.

In an implementation, the apparatus is an access and mobility management function network element.

In another implementation, the apparatus is a chip, a chip system, or a circuit used in the access and mobility management function network element.

According to an eighth aspect, a communication apparatus is provided. The apparatus includes at least one processor, configured to execute a computer program or instructions stored in a memory, to perform the method in any one of the possible implementations of the second aspect or the fifth aspect. Optionally, the apparatus further includes a memory, configured to store a computer program or instructions. Optionally, the apparatus further includes a communication interface, and the processor reads, through the communication interface, the computer program or the instructions stored in the memory.

In an implementation, the apparatus is a terminal device.

In another implementation, the apparatus is a chip, a chip system, or a circuit used in the terminal device.

According to a ninth aspect, a communication apparatus is provided. The apparatus includes at least one processor, configured to execute a computer program or instructions stored in a memory, to perform the method in any one of the possible implementations of the fourth aspect. Optionally, the apparatus further includes a memory, configured to store a computer program or instructions. Optionally, the apparatus further includes a communication interface, and the processor reads, through the communication interface, the computer program or the instructions stored in the memory.

In an implementation, the apparatus is a network slice admission control function network element.

In another implementation, the apparatus is a chip, a chip system, or a circuit used in the network slice admission control function network element.

According to a tenth aspect, this application provides a processor, including an input circuit, an output circuit, and a processing circuit. The processing circuit is configured to receive a signal through the input circuit, and transmit a signal through the output circuit, to enable the processor to perform the method in any one of the possible implementations of the first aspect to the fifth aspect.

In a specific implementation process, the processor may be one or more chips, the input circuit may be an input pin, the output circuit may be an output pin, and the processing circuit may be a transistor, a gate circuit, a trigger, various logic circuits, and the like. An input signal received by the input circuit may be received and input by, for example, but not limited to, a transceiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in embodiments of this application.

Unless otherwise specified, or if operations such as sending and obtaining/receiving related to the processor do not conflict with actual functions or internal logic in related descriptions, the operations may be understood as operations such as outputting, receiving, and inputting of the processor, or may be understood as sending and receiving operations performed by a radio frequency circuit and an antenna. This is not limited in this application.

According to an eleventh aspect, a processing device is provided, including a processor and a memory. The processor is configured to read instructions stored in the memory, receive a signal by using a transceiver, and transmit a signal by using the transmitter, to perform the method in any one of the possible implementations of the first aspect to the fifth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that, a related data exchange process such as sending indication information may be a process of outputting the indication information from the processor, and receiving capability information may be a process of receiving input capability information by the processor. Specifically, data output by the processor may be output to the transmitter, and input data received by the processor may be from the transceiver. The transmitter and the transceiver may be collectively referred to as a transceiver.

The processing device in the eleventh aspect may be one or more chips. The processor in the processing device may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a twelfth aspect, a computer-readable storage medium is provided. The computer-readable medium stores program code to be executed by a device, and the program code is for performing the method in any one of the possible implementations of the first aspect to the fifth aspect.

According to a thirteenth aspect, a computer program product including instructions is provided. When the computer program product is run on a computer, the computer is enabled to perform the method in any one of the possible implementations of the first aspect to the fifth aspect.

According to a fifteenth aspect, a communication system is provided. The communication system includes an access and mobility management function network element and a terminal device. The access and mobility management function network element is configured to perform the method in any one of the possible implementations of the first aspect, and the terminal device is configured to perform the method in any one of the possible implementations of the second aspect.

According to a sixteenth aspect, a communication system is provided. The communication system includes an access and mobility management function network element and a terminal device. The access and mobility management function network element is configured to perform the method in any one of the possible implementations of the third aspect, and the terminal device is configured to perform the method in any one of the possible implementations of the fifth aspect.

According to a seventeenth aspect, a communication system is provided. The communication system includes an access and mobility management function network element and a terminal device. The access and mobility management function network element is configured to perform the method in any one of the possible implementations of the fourth aspect, and the terminal device is configured to perform the method in any one of the possible implementations of the fifth aspect.

### BRIEF DESCRIPTION OF DRAWINGS

FIG. 1 is a schematic diagram of a system architecture applicable to this application;
FIG. 2 is a schematic block diagram of a communication method 200 according to this application;
FIG. 3 is a schematic flowchart of a communication method 300 according to this application;
FIG. 4 is a schematic block diagram of a communication method 400 according to this application;
FIG. 5 is a schematic flowchart of a communication method 500 according to this application;
FIG. 6 is a schematic block diagram of a communication method 600 according to this application;
FIG. 7 is a schematic flowchart of a communication method 700 according to this application;
FIG. 8 is a schematic block diagram of a communication apparatus 100 according to this application; and
FIG. 9 is a schematic block diagram of a communication apparatus 200 according to this application.

### DESCRIPTION OF EMBODIMENTS

The following describes technical solutions of embodiments in this application with reference to accompanying drawings.

A wireless communication system mentioned in this application includes but is not limited to a global system for mobile communication (global system for mobile communication, GSM), a long term evolution (long term evolution, LTE) frequency division duplex (frequency division duplex, FDD) system, an LTE time division duplex (time division duplex, TDD) system, an LTE system, a long term evolution-advanced (LTE-Advanced, LTE-A) system, a next-generation communication system (for example, a 6G communication system), a converged system of a plurality of access systems, or an evolved system.

The technical solutions provided in this application may be further applied to machine type communication (machine type communication, MTC), a machine-to-machine communication long term evolution technology (long term evolution-machine, LTE-M), a device-to-device (device-to-device, D2D) network, a machine to machine (machine to machine, M2M) network, an Internet of Things (Internet of Things, IoT) network, or another network. The IoT network may include, for example, the Internet of Vehicles. Communication manners in an Internet of Vehicles system are collectively referred to as vehicle to another device (vehicle to X, V2X, where X may represent anything). For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

It should be noted that the technical solutions provided in this application may be applicable to a 5th generation (5th generation, 5G) mobile communication technology and another future mobile communication technology, for example, a non-roaming scenario and a roaming scenario in 5G. For example, a service-oriented system architecture and an architecture based on a reference point in 5G.

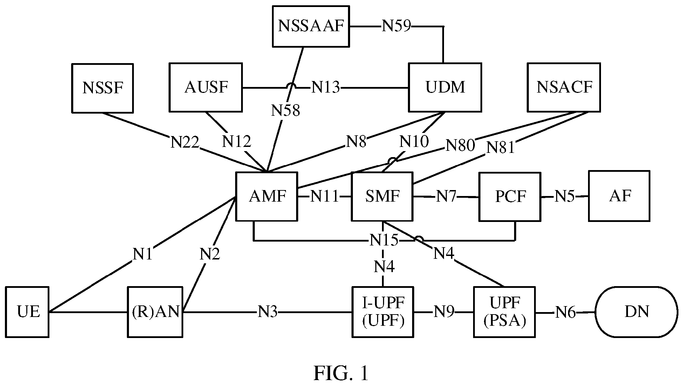

FIG. 1 is a schematic diagram of a system architecture to which this application is applicable. FIG. 1 is a schematic diagram of a non-roaming 5G system architecture (based on a reference point). For ease of understanding embodiments of this application, a system architecture applicable to embodiments of this application is first described in detail with reference to FIG. 1 The system architecture may specifically include the following network elements:
1. User equipment (user equipment, UE) may also be referred to as a terminal device, an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device that has a wireless connection function. Currently, some terminals are, for example, a mobile phone (mobile phone), a tablet computer, a notebook computer, a palmtop computer, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a terminal device in a 5G network, or a terminal device in a future evolved public land mobile network (public land mobile network, PLMN). This is not limited in embodiments of this application.

As an example instead of a limitation, in this embodiment of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on a body or integrated into clothes or an accessory of a user. The wearable device is not merely a hardware device, but is used to implement a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, the terminal device in embodiments of this application may alternatively be a terminal device in an IoT system. IoT is an important part of future development of information technologies. A main technical feature of the IoT is connecting a thing to a network by using a communication technology, to implement an intelligent network for interconnection between a person and a machine or between things.

It should be noted that the terminal device and an access network device may communicate with each other by using an air interface technology (for example, an NR or an LTE technology). Alternatively, the terminal device and the terminal device may communicate with each other by using an air interface technology (for example, an NR or an LTE technology).

In embodiments of this application, an apparatus configured to implement a function of the terminal device may be a terminal device, or may be an apparatus that can support a terminal device in implementing the function, for example, a chip system or a chip. The apparatus may be installed in the terminal device. In this embodiment of this application, the chip system may include a chip, or may include a chip and another discrete component.

2. A (radio) access network ((radio) access network, (R)AN) is used to provide a network access function for an authorized user in a specific area, and can use transmission tunnels with different quality based on user levels, service requirements, and the like. A (R)AN network element can manage radio resources and provide an access service for a terminal device, to complete forwarding of a control signal and user data between the terminal device and a core network. The (R)AN may also be understood as a base station in a conventional network.

3. An access and mobility management function (access and mobility management function, AMF) is mainly used for mobility management, access management, and the like. Specifically, the AMF may be used for implementing a function other than session management in functions of a mobility management entity (mobility management entity, MME), for example, a function such as lawful interception or access authorization (or authentication).

For example, a RAN device may use different radio access technologies. Currently, there are two types of radio access technologies: a 3GPP access technology (for example, a radio access technology used in a 3rd generation (3rd generation, 3G), 4th generation (4th generation, 4G), or 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or a RAN device. The non-3GPP access technology may include an air interface technology represented by an access point (access point, AP) in wireless fidelity (wireless fidelity, Wi-Fi), worldwide interoperability for microwave access (worldwide interoperability for microwave access, WiMAX), code division multiple access (code division multiple access, CDMA), and the like. The AN device may allow interconnection and interworking between the terminal device and a 3GPP core network by using the non-3GPP technology.

The RAN device can be responsible for functions on an air interface side, such as radio resource management, quality of service (quality of service, QoS) management, and data compression and encryption. The AN device provides an access service for the terminal device, to complete forwarding of a control signal and user data between the terminal device and the core network.

For example, the RAN device may include but is not limited to: a macro base station, a micro base station (which is also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a radio relay node, a radio backhaul node, a transmission point (transmission point, TP), or a transmission and reception point (transmission and reception point, TRP). Alternatively, the RAN device may be a gNB or a transmission point (TRP or TP) in the 5G (for example, NR) system, or one antenna panel or a group (including a plurality of antenna panels) of antenna panels of a base station in the 5G system. Alternatively, the RAN device may be a network node constituting a gNB or a transmission point, for example, a distributed unit (distributed unit, DU), or a base station in a next-generation 6G communication system. A specific technology and a specific device form that are used by the RAN device are not limited in embodiments of this application.

4. A session management function (Session Management Function, SMF) is mainly used for session management, internet protocol (Internet Protocol, IP) address assignment and management of a terminal device, manageable user plane function selection, a termination point of a policy control or charging function interface, a downlink data notification, and the like.

5. A user plane function (User Plane Function, UPF) is used for packet routing and forwarding, quality of service (quality of service, QoS) processing of user plane data, or the like. The UPF is specifically classified into an intermediate-UPF (intermediate-UPF, I-UPF) and an anchor-UPF (anchor-UPF, A-UPF). The I-UPF is connected to an access network RAN, the A-UPF is a UPF of a session anchor, and the A-UPF may also be referred to as a PDU session anchor (PDU session anchor, PSA).

6. A data network (data network, DN) is a network used to transmit data, for example, an Internet network. In the architecture in this embodiment of this application, the PSA accesses a remote DN, and an L-PSA may access a local DN.

7. An authentication server function (authentication server function, AUSF) is mainly used for user authentication and the like.

8. A policy control function (policy control function, PCF) is a unified policy framework used for instructing network behavior, and provides policy rule information and the like for a control plane function network element (for example, an AMF and SMF network element).

9. Unified data management (unified data management, UDM) is used for user identifier processing, access authentication, registration, mobility management, and the like.

10. An application function (application function, AF) mainly supports interaction with a 3rd generation partnership project (3rd generation partnership project, 3GPP) core network to provide a service, for example, affects a data routing decision or a policy control function, or provides some third-party services for a network side. The application function may be understood as a third-party server, for example, an application server in the Internet, and provides related service information, including providing quality of service requirement information corresponding to a service to the PCF and sending user plane data information of the service to a PSA-UPF. The AF may be a service provider (content provider, CP).

11. A network slice selection function (network slice selection function, NSSF) is used for network slice selection.

12. A network slice admission control function (network slice admission control function, NSACF) network element may support monitoring and controlling a quantity of registered users of each network slice, support monitoring and controlling a quantity of PDU sessions established by each network slice, and support event-based network slice status notification and reporting to another NF.

13. A network slice and SNPN authentication and authorization function (NSSAAF) supports the following functions: The NSSAAF may support specific authentication and authorization of a specified network slice by using an AAA server (AAA-S). If the AAA-S is a third party, the NSSAAF may contact the AAA-S through an AAA proxy (AAA-P). The NSSAAF supports using credentials of the AAA server (AAA-S) to access the SNPN. If a credential holder is a third party, the NSSAAF may contact the AAA server through the AAA proxy (AAA-P).

Optionally, the system architecture may further include a network data analytics function (network data analytics function, NWDAF) network element, and the NWDAF has at least one of the following functions: a data collection function and a data analysis function. The data collection function is used to collect related data from a network element, a third-party service server, a terminal device, or a network management system. The data analysis function is to perform analysis and training based on related input data to obtain a model, perform inference based on the model to determine a data analysis result, and then provide the data analysis result to the network element, the third-party service server, the terminal device, or the network management system. The analysis result may assist a network in selecting a quality of service parameter of a service, assist a network in performing traffic routing, assist a network in selecting a background traffic transmission policy, or the like.

In this embodiment of this application, the NWDAF may be an independent network element, or may be co-deployed with another core network element. For example, the NWDAF network element may be co-deployed with an access and mobility management function (access and mobility management function, AMF) network element, or co-deployed with a session management function (session management function, SMF) network element.

In the system architecture, an N1 interface is a reference point between the terminal device and the AMF. An N2 interface is a reference point between the (R)AN and the AMF, configured to send a non-access stratum (non-access stratum, NAS) message and the like. An N3 interface is a reference point between the (R)AN and the I-UPF, configured to transmit user plane data and the like. An N4 interface is a reference point between the SMF and the I-UPF, configured to transmit information such as identification information of a tunnel connected to the N3 interface, data buffer indication information, and a downlink data notification message. An N5 interface is a reference point between the PCF and the AF. An N6 interface is a reference point between the UPF and the DN, configured to transmit user plane data and the like. An N7 interface is a reference point between the SMF and the PCF. An N8 interface is a reference point between the AMF and the UDM. An N9 interface is a reference point between UPFs. An N10 interface is a reference point between the SMF and the UDM. An N11 interface is a reference point between the AMF and the SMF. An N12 interface is a reference point between the AMF and AUSF. An N22 interface is a reference point between the AMF and the NSSF. An N80 interface is a reference point between the NASCF and the AMF. An N81 interface is a reference point between the NSACF and SMF. An N59 interface is a reference point between the NSSAAF and the UDM. An N58 interface is a reference point between the NSSAAF and the AMF.

It should be understood that the system architecture applied to embodiments of this application in FIG. 1 is merely an example of a network architecture described from a perspective of a reference point architecture, and a network architecture applicable to embodiments of this application is not limited thereto. Any network architecture that can implement functions of the foregoing network elements is applicable to embodiments of this application.

It should be noted that names of interfaces between network elements in FIG. 1 are merely examples, and the names of the interfaces may be other names in a specific implementation. This is not specifically limited in embodiments of this application. In addition, this application does not exclude that with evolution of technologies, core network elements may be co-deployed.

It should be noted that, names of the network elements (such as the SMF, the AF, and the UPF) included in FIG. 1 are also merely examples, and do not constitute any limitation on functions of the network elements. In the 5G network and another future network, the foregoing network elements may alternatively have other names. This is not specifically limited in embodiments of this application. For example, in a 6G network, some or all of the foregoing network elements may still use terms in 5G, or may use other names. This is uniformly described herein. Details are not described below. In addition, it should be understood that, names of messages (or signaling) transmitted between the foregoing network elements are merely examples, and do not constitute any limitation on functions of the messages.

To facilitate understanding of embodiments of this application, terms used in this application are first briefly described.
1. Protocol data unit (protocol data unit, PDU) session: One PDU session may be a process of communication between one terminal device and a data network DN. After the PDU session is established, a data transmission channel between the UE and the DN is established. The PDU session is similar to a 2/3G packet data protocol (packet data protocol, PDP) context (context) and a 4G bearer context.

PDU session information includes related information such as a number, an international mobile subscriber identity (international mobile subscriber identity, IMSI), an international mobile equipment identity (International Mobile Equipment Identity, IMEI), a PDU session identifier (identifier, ID), a session type (IPv4, IPv6, IPv4v6, Ethernet, Unstructured), uplink and downlink rates, a charging ID, roaming status information, internet protocol (internet protocol, IP) information of the UE, PCF information, quality of service (quality of service, QoS) information, tunnel information, a destination address, an SMF identifier, slice information (if supported), default data radio bearer (data radio bearer, DRB) information, a data network name, AMF information, user location information, session management information, a UPF ID, an online charging identifier, and offline charging identifier.

It can be learned from the PDU session information that the PDU session stores important information that may be related to charging, such as user plane data routing, QoS, charging, network slicing, and a rate.

2. Network slicing: The network slicing virtualizes a plurality of end-to-end networks based on common hardware by using a slicing technology. Each network has a different network function and adapts to different types of service requirements. For example, after purchasing a physical resource, an operator virtualizes an enhanced mobile broadband (enhanced mobile broadband, eMBB) service sliced network by using the physical resource for a mass internet access service. Then, for smart meter reading requirements of some vendors in the vertical industry, the operator virtualizes a massive machine type communication (massive machine type communication, mMTC) service sliced network and an ultra-reliable and low-latency communication (ultra-reliable and low-latency communication, uRRLC) sliced network by using the physical resource. The three sliced networks separately provide services for different service scenarios.

2.1. Single network slice selection assistance information (single network slice selection assistance information, S-NSSAI): The S-NSSAI may be used to identify one network slice. Based on an operation or deployment requirement of an operator, one piece of S-NSSAI may be associated with one or more network slice instances (instances), and one network slice instance may be associated with one or more pieces of S-NSSAI.

2.2. Network slice selection assistance information (network slice selection assistance information, NSSAI) refers to a set of S-NSSNI. NSSAI used in the 5G network includes Requested (Requested) NSSAI, Allowed (Allowed) NSSAI, Configured (Configured) NSSAI, and the like.

The Requested NSSAI may be understood as NSSAI that a terminal device expects to use, and is provided by the terminal device to a network side in a registration procedure. For example, the Requested NSSAI may include a maximum of eight pieces of S-NSSAI. The Allowed NSSAI may be understood as that the Allowed NSSAI is provided by a serving PLMN for the terminal device in a procedure such as registration, and indicates an S-NSSAI value that may be used by the terminal device in a current registration area of the serving PLMN. For example, the Allowed NSSAI may include a maximum of eight pieces of S-NSSAI, and the terminal device locally stores the Allowed NSSAI. The Configured NSSAI may be understood as NSSAI applicable to one or more PLMNs, and is delivered to the terminal device by the AMF in a message such as registration accept or a configuration update command. For example, the Configured NSSAI may include a maximum of 16 pieces of S-NSSAI, and the terminal device locally stores the Configured NSSAI.

Because a network slice limits a quantity of accessed terminal devices, and the NSACF network element may monitor the quantity of accessed terminal devices in each network slice. In addition, currently, the operator is not capable of immediately allowing each terminal device to access a network slice based on an actual use request (for example, a terminal device currently needs to establish a PDU session to transmit data) of the terminal device. In this case, the following scenario may occur: A large quantity of terminal devices may request to access a network slice, but these terminal devices do not necessarily establish a PDU session. When another terminal device that has not accessed the network slice indeed needs to establish a PDU session, the NSACF may reject access of the terminal device to the network slice due to a limitation on a quantity of accessed terminal devices in the network slice. Consequently, a PDU session resource cannot be properly configured and used, and service experience of a user is deteriorated.

In view of this, this application provides a communication method and an apparatus. If an access and mobility management function network element determines that a protocol data unit PDU session status of a terminal device does not meet a first condition (the first condition is a condition related to the PDU session status of the terminal device) of a network slice after first time expires, it is determined to reject access of the terminal device to the network slice, so that a PDU session resource in the network slice can be properly configured and used.

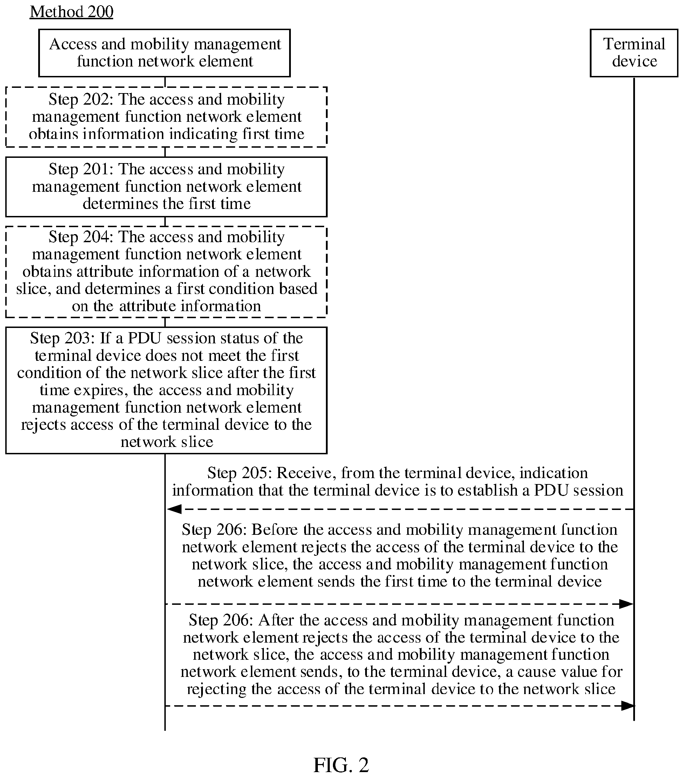

FIG. 2 is a schematic block diagram of a communication method 200 according to this application. The following describes steps shown in FIG. 2. It should be noted that the steps represented by dashed lines in FIG. 2 are optional, and details are not described in the following descriptions. The method includes the following.

Step 201: An access and mobility management function network element determines first time.

In this application, the "first time" may be understood, for example, as a time period. For another example, the "first time" may be a time unit. For example, the "time unit" may be one or more radio frames, one or more subframes, one or more slots, one or more mini-slots, or one or more symbols. The symbol may be an orthogonal frequency division multiplexing (orthogonal frequency division multiplexing, OFDM) symbol, a discrete Fourier transform spread spectrum orthogonal frequency division multiplexing (discrete Fourier transform spread spectrum orthogonal frequency division multiplexing, DFT-S-OFDM) symbol, or the like. For example, the first time may alternatively be 1 second (second, "s" for short) or a plurality of seconds, 1 millisecond (millisecond, "ms" for short) or a plurality of milliseconds.

Optionally, before step 201, the method further includes step 202: The access and mobility management function network element obtains information indicating the first time.

In a possible implementation, the access and mobility management function network element may obtain, from an NSACF, the information indicating the first time. Specifically, for example, the NSACF may send indication information #1 to the access and mobility management function network element, and the indication information #1 may indicate the first time.

In another possible implementation, the access and mobility management function network element may obtain, from a UDM, the information indicating the first time. Specifically, the NSACF may send indication information #2 to the access and mobility management function network element, and the indication information #2 may indicate the first time.

In still another possible implementation, a field indicating the first time is preconfigured on the access and mobility management function network element, and an AMF may obtain the first time from local configuration.

Step 203: If a PDU session status of a terminal device does not meet a first condition of a network slice after the first time expires, the access and mobility management function network element rejects access of the terminal device to the network slice.

It should be noted that the "network slice" mentioned in this application may alternatively be understood as S-NSSAI, and the S-NSSAI may uniquely identify the network slice. It may alternatively be understood that the "network slice" in this application may be replaced with the "S-NSSAI" for understanding, and details are not described herein again.

For example, the access and mobility management function network element may send a UE configuration update command to the terminal device during a user configuration update (user configuration update, UCU) procedure. In the UE configuration update command, a network slice requested by the terminal device may be updated to "Rejected NSSAI". This indicates that the access and mobility management function network element rejects access of the terminal device to the network slice.

In a possible implementation, the first condition of the network slice (hereinafter referred to as the "first condition") may include at least one of the following: There is a PDU session established by the terminal device for the network slice; there is an activated user plane in a PDU session established by the terminal device for the network slice; or there is data of a first service transmitting in a PDU session established by the terminal device for the network slice.

In this application, a plurality of terminal devices may be allowed to access one network slice, and each accessed terminal device may establish a plurality of PDU sessions for the network slice. In this application, that "there is a PDU session established by the terminal device for the network slice" in the first condition may be understood as that the first condition may be met as long as the terminal device establishes any PDU session for the network slice. Similarly, that "there is an activated user plane in a PDU session established by the terminal device for the network slice" may alternatively be understood as that there is an activated user plane in any PDU session established by the terminal device for the network slice, in other words, the first condition may be met. That "there is data of a first service transmitting in a PDU session established by the terminal device for the network slice" may be understood as that there is the data of the first service transmitting in any PDU session established by the terminal device for the network slice, in other words, the first condition may be met.

In this application, that "there is an activated user plane in an established PDU session" may be understood as that there is data transmission in the established PDU session.

The "first service" in this application may be any one of a plurality of data transmission services of the terminal device, or may be a specific service (which may also be understood as a specific application) of a plurality of data transmission services of the terminal device. This is not limited.

For example, the access and mobility management function network element may start a timer at a specific moment, and timing duration of the timer is the first time (for example, the first time may be 20 seconds).

For example, a moment at which the access and mobility management function network element starts the timer may be, for example, a moment at which the access and mobility management function network element receives a message indicating that the terminal device requests to access the network slice. In this case, after the timer expires, the access and mobility management function network element may determine whether the terminal device establishes a PDU session for the network slice, whether there is an activated user plane in a PDU session established for the network slice, or whether there is data of a first service in a PDU session established for the network slice.

For example, the moment at which the timer is started may be a moment at which the access and mobility management function network element senses that the terminal device releases one of the PDU sessions established for the network slice (for example, may be a moment at which the access and mobility management function network element senses that the terminal device releases a last PDU session established for the network slice). In this case, after the timer expires, the access and mobility management function network element may determine whether there is a PDU session established by the terminal device for the network slice, whether there is an activated user plane in a PDU session established for the network slice, or whether there is data of a first service transmitting in the PDU session established for the network slice.

For example, the moment at which the timer is started may be a moment at which the access and mobility management function network element senses that the terminal device completes establishment of one PDU session (for example, a PDU session #1) for the network slice for the first time (in this scenario, the first condition may be: there is an activated user plane in a PDU session established by the terminal device for the network slice, or there is data of a first service transmitting in a PDU session established by the terminal device for the network slice). In this case, after the timer expires, the access and mobility management function network element may determine whether there is an activated user plane in the PDU session established for the network slice, or whether there is data of a first service transmitting in the PDU session established for the network slice.

For example, the moment at which the timer is started may be a moment at which the access and mobility management function network element senses a deactivated user plane in a PDU session established by the terminal device for the network slice (for example, may be a moment at which the access and mobility management function network element senses that a last PDU session that is established by the terminal device and that has an activated user plane is deactivated) (in this scenario, the first condition may be: there is an activated user plane in a PDU session established by the terminal device for the network slice, or there is data of a first service transmitting in a PDU session established by the terminal device for the network slice). In this case, after the timer expires, the access and mobility management function network element may determine whether there is an activated user plane in the PDU session established for the network slice, or whether there is data of a first service transmitting in a PDU session established for the network slice.

For example, the moment at which the timer is started may be a moment at which the access and mobility management function network element determines that a first service ends (for example, a moment at which the access and mobility management function network element may determine, based on subscribed end time of the first service, that the first service ends) (in this scenario, the first condition may be: there is an activated user plane in the PDU session established by the terminal device for the network slice, or there is data of the first service transmitting in the PDU session established by the terminal device for the network slice). In this case, after the timer expires, the access and mobility management function network element may determine whether there is an activated user plane in the PDU session established for the network slice, or whether there is data of the first service transmitting in the PDU session established for the network slice.

In this case, step 203 may alternatively be understood as that, if the PDU session status of the terminal device meets the first condition of the network slice before the first time expires, the access and mobility management function network element allows the terminal device to access the network slice (in other words, the S-NSSAI still belongs to Allowed NSSAI).

In another possible implementation, the first condition may include at least one of the following: There is no PDU session established by the terminal device for the network slice; there is no activated user plane in the PDU session established by the terminal device for the network slice; or there is no data of afirst service transmitting in the PDU session established by the terminal device for the network slice.

In this case, step 203 may be understood as that, if the PDU session status of the terminal device meets the first condition of the network slice after the first time expires, the access and mobility management function network element rejects the access of the terminal device to the network slice.

Specifically, the first condition may be that there is an activated user plane in a PDU session established by the terminal device for the network slice, and there is data of a first service transmitting in a PDU session established by the terminal device for the network slice. For another example, the first condition may be that the terminal device establishes a PDU session for the network slice, and there is data of a first service transmitting in a PDU session established for the network slice.

For example, the "first condition" in this application may be obtained by the access and mobility management function network element from the NSACF, may be obtained by the access and mobility management function network element from the UDM, or may be locally configured by the access and mobility management function network element. This is not limited.

In a possible implementation, the access and mobility management function network element may subscribe to a start event of the first service from a session management function network element.

In a possible implementation, the access and mobility management function network element may subscribe to the start event of the first service from a policy control management network element.

Optionally, the access and mobility management function network element may further subscribe to an end event of the first service from the session management function network element.

In this application, the "start event of the first service" may be understood as an event of starting transmission of data of the first service. The "end event of the first service" may be understood as an event of ending the transmission of data of the first service.

For example, a timer (for example, a timer) may be configured on the access and mobility management function network element, and the access and mobility management function network element may start the timer. If the terminal device still does not establish a PDU session 30 seconds (for example, the first time is 30 seconds) after the timer is started, the access and mobility management function network element may reject the access of the terminal device to the network slice.

Optionally, before step 203, the method further includes step 204: The access and mobility management function network element obtains attribute information of the network slice, and determines the first condition based on the attribute information.

In a possible implementation, the attribute information of the network slice may include at least one of the following: After the first time expires, if there is no PDU session established by the terminal device for the network slice, the access of the terminal device to the network slice is rejected; after the first time expires, if there is no activated user plane in a PDU session established by the terminal device for the network slice, the access and mobility management function network element rejects the access of the terminal device to the network slice; or after the first time expires, if there is no data of a first service transmitting in a PDU session established by the terminal device for the network slice, the access and mobility management function network element rejects the access of the terminal device to the network slice.

It should be noted that, if the terminal device subscribes to a specific service in a plurality of data transmission services, the attribute information of the network slice and the PDU session status of the terminal device may further include identification information of the specific application or a data flow template (for example, an internet protocol (internet protocol, IP) 5-tuple (that is, a source IP address, a source port, a destination IP address, a destination port, and a transport layer protocol)) of the specific service.

In another possible implementation, the attribute information of the network slice may include at least one of the following: Before the first time expires, if there is a PDU session established by the terminal device for the network slice, the terminal device is allowed to access the network slice; before the first time expires, if there is an activated user plane in a PDU session established by the terminal device for the network slice, the access and mobility management function network element allows the terminal device to access the network slice; or before the first time expires, if there is data of a first service transmitting in a PDU session established by the terminal device for the network slice, the access and mobility management function network element allows the terminal device to access the network slice.

In this application, the attribute information of the network slice may be obtained by the access and mobility management function network element from the NSACF, may be obtained by the access and mobility management function network element from the UDM, or may be locally configured by the access and mobility management function network element. This is not limited.

It should be understood that there may be no sequence between step 204, step 201, and step 202. For example, step 201 and step 203 may be performed simultaneously. In other words, when determining the first time, the terminal device may further obtain the attribute information of the network slice. This is not limited.

Optionally, the method further includes step 205: The access and mobility management function network element receives, from the terminal device, indication information that the terminal device is to establish a PDU session, and determines the first time based on the indication information.

In a possible implementation, the first time determined by the access and mobility management function network element in step 201 is time #A. If the access and mobility management function network element receives, from the terminal device, the indication information that the terminal device is to establish a PDU session, the access and mobility management function network element prolongs the time #A. In this application, the prolonged time is recorded as time #B, the time #B is greater than the time #A, and finally the time #B is used as the first time.

In another possible implementation, a plurality of timers are preconfigured in the access and mobility management function network element. Once the access and mobility management function network element receives, from the terminal device, the indication information that the terminal device is to establish a PDU session, the access and mobility management function network element selects a timer that has long timing duration from the plurality of timers as a timer of the first time.

In still another possible implementation, if the access and mobility management function network element receives, from the terminal device, the indication information that the terminal device is to establish a PDU session, the access and mobility management function network element may directly modify ("modify" may alternatively be understood as "update" or "reset") the first time determined in step 201, so that the modified first time is greater than the first time determined in step 201.

In other words, for the foregoing several implementations, when a network device sets the first time based on the indication information from the terminal device that the terminal device is to establish a PDU session, the first time of the terminal device may be sufficient considering that the terminal device is to subsequently establish a PDU session.

In another possible implementation, the first time determined by the access and mobility management function network element in step 201 is the time #A. If the access and mobility management function network element receives, from the terminal device, the indication information that the terminal device is to establish a PDU session, subsequently, even if the PDU session status of the terminal device does not meet the first condition, the access and mobility management function network element does not reject the access of the terminal device to the network slice (in other words, the S-NSSAI still belongs to the Allowed NSSAI). Further, if the S-NSSAI becomes the Allowed NSSAI, the terminal device may establish a PDU session before the first time expires.

In other words, for the foregoing last implementation, as long as the terminal device is to subsequently establish a PDU session and sends corresponding indication information, the foregoing monitoring for the slice may be canceled. Subsequently, even if the PDU session status of the terminal device does not meet the first condition, the access and mobility management function network element does not reject the access of the terminal device to the network slice.

It may alternatively be understood as that, a "new PDU session status" (that is, the status of the PDU session to be established by the terminal device) is introduced in this application, so that the access and mobility management function network element may determine, based on the status of the PDU session to be established by the terminal device, not to reject the access of the terminal device to the network slice. This not only improves configuration and usage efficiency of the PDU session in the network slice, but also improves efficiency of accessing the network slice by the terminal device.

Optionally, the method further includes step 206: Before the access and mobility management function network element rejects the access of the terminal device to the network slice, the access and mobility management function network element sends the first time to the terminal device.

It may alternatively be understood as that, in this application, the access and mobility management function network element may further send the first time to the terminal device, to enable the terminal device to sense that, after the first time expires, if there is no PDU session established, if there is no activated user plane in an established PDU session, or if there is no data of afirst service transmitting in an established PDU session, the access of the terminal device to the network slice is rejected.

In this case, the terminal device may receive the first time from the access and mobility management function network element. If the PDU session status of the terminal device does not meet the first condition after the first time expires, the terminal device receives, from the access and mobility management function network element, information indicating that access to the network slice is rejected. In this case, the first condition includes at least one of the following: The terminal device establishes a PDU session for the network slice; there is an activated user plane in a PDU session established by the terminal device for the network slice; or there is data of a first service transmitting in a PDU session established by the terminal device for the network slice.

Alternatively, the terminal device may receive the first time from the access and mobility management function network element. If the PDU session status of the terminal device meets the first condition after the first time expires, the terminal device receives, from the access and mobility management function network element, the information indicating that the access to the network slice is rejected. In this case, the first condition includes at least one of the following: There is no PDU session established by the terminal device for the network slice; there is no activated user plane in a PDU session established by the terminal device for the network slice; or there is no data of a first service transmitting in a PDU session established by the terminal device for the network slice.

Optionally, the method further includes step 207: After the access and mobility management function network element rejects the access of the terminal device to the network slice, the access and mobility management function network element sends, to the terminal device, a cause value indicating why the access and mobility management function network element rejects the access of the terminal device to the network slice. Correspondingly, the terminal device may receive the cause value.

In a possible implementation, the "cause value" may include at least one of the following: There is no PDU session established by the terminal device for the network slice; there is no activated user plane in a PDU session established by the terminal device for the network slice; or there is no data of a first service transmitting in a PDU session established by the terminal device for the network slice.

In another possible implementation, the "cause value" may include at least one of the following: The terminal device needs to establish a PDU session for the network slice; a PDU session established by the terminal device for the network slice needs to have an activated user plane; or a PDU session established by the terminal device for the network slice needs to transmit data of the first service.

In still another possible implementation, the "cause value" may include at least one of the following: There is no PDU session established by the terminal device for the network slice after the first time expires; there is no activated user plane in a PDU session established by the terminal device for the network slice after the first time expires; or there is no data of a first service transmitting in a PDU session established by the terminal device for the network slice after the first time expires.

In the foregoing last implementation, the terminal device may sense that, a PDU session needs to be established before the first time expires, there needs to be an activated user plane in a PDU session established for the network slice before the first time expires, or there needs to be data of a first service transmitting in the PDU session established for the network slice before the first time expires, so that the access to the network slice is not rejected. Specifically, it is assumed that access of a terminal device #1 to a network slice #1 is rejected by the access and mobility management function network element, and the terminal device #1 receives a cause value. In this case, the terminal device #1 may still request to access the network slice #1 from the access and mobility management function network element. However, in this case, the terminal device #1 establishes a PDU session for the network slice before the first time expires, there is an activated user plane in a PDU session established for the network slice before the first time expires, or there is data of a first service transmitting in a PDU session established for the network slice before the first time expires.

Further, if the terminal device determines that no PDU session is to be established before the first time expires, the terminal device does not request the S-NSSAI (in other words, the Requested NSSAI does not include the S-NSSAI). Alternatively, if the terminal device determines that a PDU session is to be established before the first time expires, the terminal device requests the S-NSSAI (in other words, the Requested NSSAI may include the S-NSSAI). For example, the terminal device may determine, based on stored historical information, whether a PDU session is subsequently established for the network slice.

Alternatively, if the terminal device determines that a user plane is not activated in an established PDU session before the first time expires, the terminal device does not request the S-NSSAI (in other words, the Requested NSSAI does not include the S-NSSAI). Alternatively, if the terminal device determines that there is an activated user plane in an established PDU session before the first time expires, the terminal device requests the S-NSSAI (in other words, the Requested NSSAI may include the S-NSSAI). For example, the terminal device may determine, based on the stored historical information, whether there is an activated user plane in a subsequent PDU session established for the network slice. For example, the terminal device #1 may determine, based on configuration information or historical information, that a video conference needs to be performed at 8 p.m. In this case, access to the network slice may be requested.

Alternatively, if the terminal device determines that there is no data of a first service transmitting in an established PDU session before the first time expires, the terminal device does not request the S-NSSAI (in other words, the Requested NSSAI does not include the S-NSSAI). Alternatively, if the terminal device determines that there is data of the first service transmitting in an established PDU session before the first time expires, the terminal device requests the S-NSSAI (in other words, the Requested NSSAI may include the S-NSSAI). For example, the terminal device may determine, based on the stored historical information, whether there is data of the first service transmitting in a subsequent PDU session established for the network slice. For example, a terminal device #2 may determine, based on configuration information or historical information, that an application (application, APP) is used at 6:00 a.m. In this case, the access to the network slice may be requested.

Based on the foregoing technical solutions, in this application, the access and mobility management function network element may determine, based on the first time and the first condition (to be specific, if the access and mobility management function network element determines that the PDU session status of the terminal device does not meet the first condition of the network slice after the first time expires), to reject the access of the terminal device to the network slice. Therefore, it is ensured that no terminal device accesses the network slice for a long period of time without establishing/activating a PDU session, to improve usage efficiency of a PDU session resource in the network slice, and improve service experience of a user.

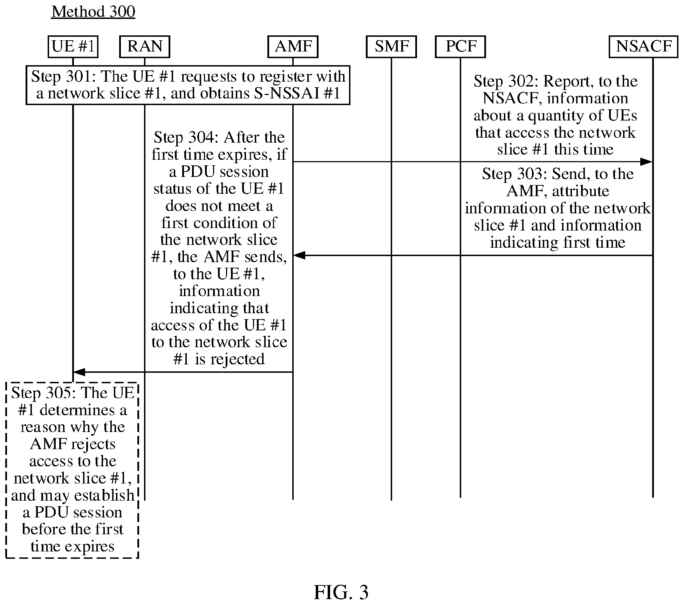

FIG. 3 is a communication method 300 according to a specific embodiment of this application. The method shows technical solutions of this application from a perspective of interaction between network elements. In the method 300, an example in which a terminal device is a UE #1 and a network slice is a network slice #1 is used for description. The method 300 includes the following steps.

Step 301: The UE #1 requests to register with the network slice #1, and obtains S-NSSAI #1.

"Register" in step 301 may alternatively be understood as "access". The S-NSSAI #1 may be used to identify the network slice #1.

For a specific implementation of step 301, refer to section 5.15 of the technical specification (technical specification, TS) 23.501.

For example, when registering with a public land mobile network PLMN by using an access type, a UE may send a registration request message to a RAN. The RAN may select an initial (Initial) AMF for the terminal device based on Requested NSSAI. The initial AMF may determine, based on the received Requested NSSAI, Subscribed S-NSSAI, and local configuration, whether to provide a service for the UE. If the AMF may serve the UE, the initial AMF is still a serving AMF of the UE. Then, the AMF constructs Allowed NSSAI based on the Subscribed S-NSSAI and the Requested NSSAI, and sends the Allowed NSSAI to the UE by using a registration accept message.

In other words, it may alternatively be understood as that, in step 301, the UE may access the network slice #1.

Step 302: The AMF reports, to an NSACF, information about a quantity of UEs that access the network slice #1 this time. The corresponding NSACF receives the information.

Step 303: The NSACF sends, to the AMF, attribute information of the network slice #1 and information indicating first time. Correspondingly, the AMF receives the attribute information of the network slice #1 and the information indicating the first time.

For example, after receiving the information that is sent and reported by the AMF and that is about the quantity of UEs that access the network slice #1 this time, the NSACF may send, to the AMF, the attribute information of the network slice #1 and the information indicating the first time.

It should be understood that the attribute information of the network slice #1 and the information indicating the first time that are sent by the NSACF to the AMF may be sent in a same piece of information, or may be separately sent in different pieces of information. This is not limited in this application.

Specifically, for an understanding of the "attribute information" and the "first time" in step 303, refer to the descriptions of the "attribute information" in step 204 of the method 200.

Step 304: After the first time expires, if a PDU session status of the UE #1 does not meet a first condition of the network slice #1, the AMF sends, to the UE #1, information indicating that access of the UE #1 to the network slice #1 is rejected. Correspondingly, the UE #1 receives the information.

Specifically, the AMF may determine the first condition based on the attribute information of the network slice #1, and determine the first time based on the information indicating the first time.

Specifically, for an understanding of the "first condition" in step 304, refer to the descriptions of the "first condition" in step 203 of the method 200.

In this application, for example, the AMF may sense the PDU session status of the UE #1. For another example, the AMF may further obtain, from an NWDAF, a PDU session status of a UE corresponding to each subscription permanent identifier (subscription permanent identifier, SUPI). For a specific implementation in which the NWDAF provides the PDU session status, refer to step 601 of the method 600. For still another example, the AMF may further obtain the PDU session status of the UE #1 from an SMF. For yet another example, the AMF may obtain the PDU session status of the UE #1 from an NEF. Descriptions are not repeated in the following embodiments.

For example, if the attribute information of the network slice #1 is that, after the first time expires, if the UE #1 does not have an activated user plane in a PDU session established for the network slice #1, access of the UE to the network slice #1 is rejected, the AMF determines that the first condition is that the UE #1 needs to have an activated user plane in a PDU session established for the network slice #1. In this case, the AMF may subscribe to whether there is data in the PDU session from the SMF. Alternatively, the AMF may sense a deactivated PDU session.

For example, if the attribute information of the network slice #1 is that, after the first time expires, if the UE #1 does not have data of a service #1 transmitting in the PDU session established for the network slice #1, the access of the UE to the network slice #1 is rejected, the AMF determines that the first condition is that the UE #1 needs to have the data of the service #1 transmitting in the PDU session established for the network slice #1. In this case, the AMF may subscribe to start time and an end event of the service #1 from the SMF or a PCF.

For example, the AMF may determine the first time by using the information indicating the first time. For example, if the information indicating the first time is a field #1 in downlink control information (downlink control information, DCI), the AMF may determine a value of time #A (an example of the first time) by parsing the field #1 in the DCI. For example, the time #A is 30 ms.

In another possible implementation, in step 301, if a follow on indication (indication information that the terminal device is to establish a PDU session) is carried when the UE #1 requests to register with the network slice #1, the AMF may re-determine the first time based on the indication information.

For example, the AMF may request to prolong the time #A. Specifically, the AMF may request the NSACF or a UDM to prolong the time #A. For example, the prolonged time is time #B (an example of the first time) that is 100 ms. Alternatively, the AMF may select, from a plurality of preconfigured timers, a timer whose timing duration is longer than that of the time #A as a basis for determining whether to reject the access of the UE #1 to the network slice #1. Alternatively, the AMF may directly reset the first time to time #C, and the time #C is greater than the time #A. For example, the time #C is 200 ms. Alternatively, even if the PDU session status of the UE #1 does not meet the first condition subsequently, the AMF does not reject access of the terminal device to the network slice #1.

It should be noted that, in the conventional technology, the access and mobility management function network element does not impose any limitation on a PDU session status when a terminal device requests to access a network slice. However, in this application, when the PDU session status of the terminal device meets the first condition of the network slice, although the access and mobility management function network element allows the terminal device to access the network slice (in other words, the S-NSSAI #1 in step 301 is still the Allowed NSSAI), compared with an existing procedure, all terminal devices that access the network slice can effectively use a PDU session resource in a network, to improve service experience of a user.

In this application, that the AMF rejects the access of the UE #1 to the network slice #1 may be specifically as follows: The AMF sends, to the UE #1, information indicating that the access of UE #1 to the network slice #1 is rejected. Correspondingly, the UE #1 receives the information.

Optionally, the information may further include a cause value for rejecting the access of the UE #1. Optionally, the information may further include the first time.

For example, the AMF may send a UE configuration update command to the UE #1. The UE configuration update command indicates that the access of the UE #1 to the network slice #1 is rejected.

Certainly, the AMF may alternatively reject, based on an existing cause value, the access of the UE #1 to the network slice #1. In this way, the UE #1 is not affected. However, the UE #1 does not know a reason why the access of the UE #1 to the network slice #1 is rejected.

For an understanding of the foregoing "cause value", refer to the descriptions of the "cause value" in step 207 of the method 200.

Based on the foregoing technical solutions, in this application, the AMF may determine, based on the first time and the first condition (to be specific, if the AMF determines that the UE does not meet the first condition of the network slice after the first time expires), to reject access of the UE to the network slice. Therefore, it is ensured that no UE accesses the network slice for a long period of time without establishing/activating a PDU session, to improve usage efficiency of a PDU session resource in the network slice, and improve service experience of a user.

In addition, optionally, the method may further include the following.

Step 305: The UE #1 determines a reason why the AMF rejects access to the network slice #1, may establish a PDU session before the first time expires, and re-requests access to the network slice #1.

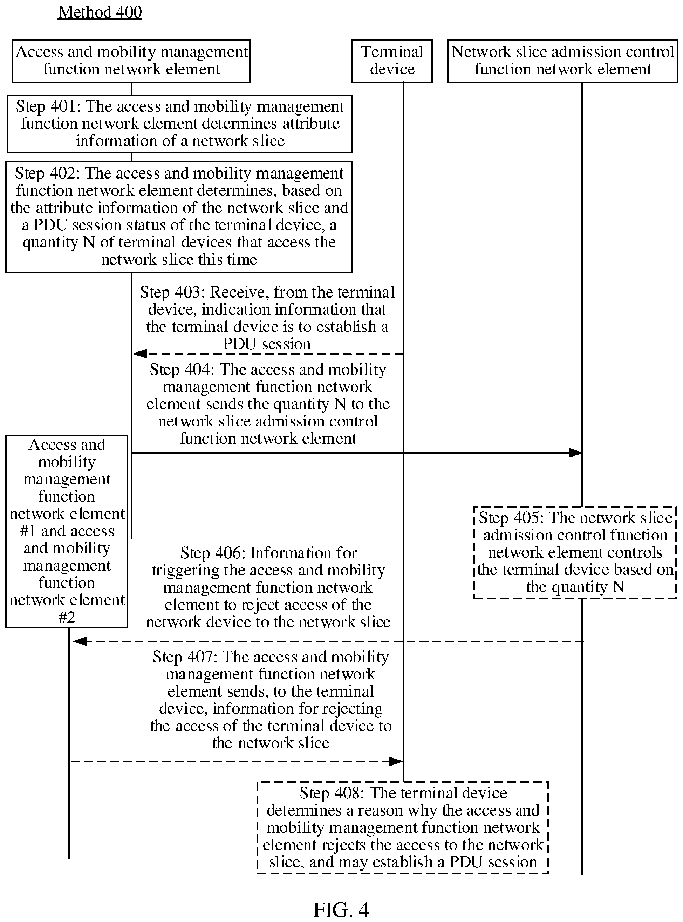

FIG. 4 is a schematic block diagram of a communication method 400 according to this application. The method includes the following.

Step 401: An access and mobility management function network element determines attribute information of a network slice.

In a possible implementation, the attribute information of the network slice in this embodiment may be understood as the attribute information of the network slice described in step 204 of the method 200.

In another possible implementation, the attribute information of the network slice in this embodiment may alternatively be understood as including at least one of the following: If there is no PDU session established by a terminal device for the network slice, the access and mobility management function network element rejects access of the terminal device to the network slice; if there is no activated user plane in a PDU session established by a terminal device for the network slice, the access and mobility management function network element rejects access of the terminal device to the network slice; or if there is no data of a first service transmitting in a PDU session established by a terminal device for the network slice, the access and mobility management function network element rejects access of the terminal device to the network slice.

Alternatively, the attribute information of the network slice in this embodiment may be understood as including at least one of the following: If there is a PDU session established by a terminal device for the network slice, the access and mobility management function network element allows the terminal device to access the network slice; if there is an activated user plane in a PDU session established by a terminal device for the network slice, the access and mobility management function network element allows the terminal device to access the network slice; or if there is data of a first service transmitting in a PDU session established by a terminal device for the network slice, the access and mobility management function network element allows the terminal device to access the network slice.

In other words, in this implementation, the attribute information of the network slice is compared with the "attribute information of the network slice" mentioned in step 204. The access and mobility management function network element does not need to consider a factor of the "first time" when determining, based on a PDU session status of the terminal device and the attribute information of the network slice, whether to reject the access of the terminal device to the network slice. For example, after determining the attribute information of the network slice, if the access and mobility management function network element senses that the terminal device has not established a PDU session, the access and mobility management function network element immediately rejects the access of the terminal device to the network slice.

Step 402: The access and mobility management function network element determines, based on the attribute information of the network slice and the PDU session status of the terminal device, a quantity N of terminal devices that access the network slice this time, where N is greater than or equal to 0, and is less than or equal to 1.

For example, the access and mobility management function network element may determine, at a moment when receiving a message indicating that the terminal device requests to access the network slice, the quantity N of terminal devices that access the network slice this time. For another example, the access and mobility management function network element may determine, at a moment at which the access and mobility management function network element senses that the terminal device releases one of PDU sessions established for the network slice, the quantity N of terminal devices that access the network slice this time For still another example, the access and mobility management function network element may determine, at a moment at which the access and mobility management function network element senses that the terminal device completes establishment of one PDU session (for example, a PDU session #1) for the network slice for the first time, the quantity N of terminal devices that access the network slice this time. For example, the access and mobility management function network element may determine, at a moment at which the access and mobility management function network element senses a deactivated user plane in a PDU session established by the terminal device for the network slice, the quantity N of terminal devices that access the network slice this time. For example, the access and mobility management function network element may determine, at an end moment of determining the first service, the quantity N of terminal devices that access the network slice this time.

It may alternatively be understood as that, in this application, as long as the PDU session status of the terminal device changes, the access and mobility management function network element may update the quantity N of terminal devices that access the network slice this time.

Specifically, the terminal device may determine a value of N in the following implementations:
In a possible implementation, for example, the attribute information of the network slice is as follows: After the first time expires, if there is no PDU session established by the terminal device for the network slice, the access and mobility management function network element rejects the access of the terminal device to the network slice. In this case, if the access and mobility management function network element senses that there is no PDU session established by the terminal device, it may be determined that N is 0. If the access and mobility management function network element senses that there is a PDU session established by the terminal device, it may be determined that N is 1. Specifically, if the access and mobility management function network element senses that there is a PDU session established by the terminal device, but there is no activated user plane in the PDU session, it may be determined that N is 1. If the access and mobility management function network element senses that there is a PDU session established by the terminal device, and there is an activated user plane in the PDU session, it may be determined that N is 1. If the access and mobility management function network element senses that there is a PDU session established by the terminal device but there is no data of a first service transmitting in the PDU session, it may be determined that N is 1. If the access and mobility management function network element senses that there is a PDU session established by the terminal device and there is data of a first service transmitting in the PDU session, it may be determined that N is 1. In other words, as long as the access and mobility management function network element senses that there is a PDU session established by the terminal device, no matter whether there is an activated user plane in the PDU session or whether there is data of a first service transmitting in the PDU session, it may be determined that N is 1.

In another possible implementation, the attribute information of the network slice is as follows: If there is no activated user plane in a PDU session established by the terminal device for the network slice, the access and mobility management function network element rejects the access of the terminal device to the network slice. In this case, if the access and mobility management function network element senses that there is no PDU session established by the terminal device, it may be determined that N is 0. If the access and mobility management function network element senses that there is a PDU session established by the terminal device, but there is no activated user plane in the PDU session, it may be determined that N is 0.5. If the access and mobility management function network element senses that there is a PDU session established by the terminal device, and there is an activated user plane in the PDU session, it may be determined that N is 1. It may be understood that if there is data of a first service transmitting in the PDU session, it indicates that there is an activated user plane in the PDU session. If the access and mobility management function network element senses that there is a PDU session established by the terminal device and there is data of a first service, it may be determined that N is 1.

In still another possible implementation, the attribute information of the network slice is as follows: If there is no data of a first service transmitting in the PDU session established by the terminal device for the network slice, the access and mobility management function network element rejects the access of the terminal device to the network slice. In this case, if the access and mobility management function network element senses that there is no PDU session established by the terminal device, it may be determined that N is 0. If the access and mobility management function network element senses that there is a PDU session established by the terminal device, but there is no activated user plane in the PDU session, it may be determined that N is 0.5. If the access and mobility management function network element senses that there is a PDU session established by the terminal device and there is an activated user plane, but there is no data of a first service, it may be determined that N is 0.7. If the access and mobility management function network element senses that there is a PDU session established by the terminal device and the PDU session is transmitting the data of the first service, it may be determined that N is 1.

When the value of N is a decimal ranging from 0 to 1, in this case, it may be understood as that, a resource of a PDU session that needs to be occupied by the terminal device is a resource obtained by multiplying the resource by a multiple of a decimal ranging from 0 to 1. The implementation may also be understood as that, if the access and mobility management function network element determines that the PDU session status of the terminal device does not conform to an attribute of the network slice, an AMF determines that N is greater than 0 and less than 1. Based on the method provided in this application, that the value of N may be a decimal from 0 to 1 is provided. It may alternatively be understood that, in this case, the terminal device does not need to occupy a quota or occupies a small quota, so that more terminal devices that meet the attribute of the network slice are allowed to access the network slice, to improve usage efficiency of a PDU session resource.

It should be understood that, in this embodiment, the access and mobility management function network element may update the value of N in real time based on the PDU session status of the terminal device.

It is assumed that the attribute information of the network slice is as follows: After the first time expires, if there is no PDU session established by the terminal device for the network slice, the access and mobility management function network element rejects the access of the terminal device to the network slice. In this case, if the access and mobility management function network element senses, at a moment #1, that there is no PDU session established by the terminal device, it may be determined that N is 0. In other words, the access and mobility management function network element may report the value of N to a network slice admission control function network element once. After the moment #1, if the access and mobility management function network element senses, at a moment #2, that there is a PDU session established by the terminal device, it may be determined that N is 1. In other words, the access and mobility management function network element may update the value of N to the network slice admission control function network element again.

Optionally, the method further includes step 403: The access and mobility management function network element receives, from the terminal device, indication information that the terminal device is to establish a PDU session, and determines that N is greater than 0.

For example, the access and mobility management function network element receives, from the terminal device, the indication information that the terminal device is to establish a PDU session, and if the attribute information of the network slice is as follows: after the first time expires, if there is no PDU session established by the terminal device for the network slice, the access and mobility management function network element rejects the access of the terminal device to the network slice, in this case, even if the access and mobility management function network element senses that there is no PDU session established by the terminal device, the access and mobility management function network element determines that N is 1, determines that N is 0.5, or determines that N is 0.8.

For another example, the access and mobility management function network element receives, from the terminal device, the indication information that the terminal device is to establish a PDU session, and if the attribute information of the network slice is as follows: if there is no activated user plane in the PDU session established by the terminal device for the network slice, the access and mobility management function network element rejects the access of the terminal device to the network slice, in this case, even if the access and mobility management function network element senses that there is no PDU session established by the terminal device, senses that there is no activated user plane in the PDU session established by the terminal device, or senses that there is no data of a first service transmitting in the PDU session established by the terminal, the access and mobility management function network element determines that N is 1, determines that N is 0.5, or determines that N is 0.8.

For still another example, the access and mobility management function network element receives, from the terminal device, the indication information that the terminal device is to establish a PDU session, and if the attribute information of the network slice is as follows: if there is no dataof a first service transmitting in the PDU session established by the terminal device for the network slice, the access and mobility management function network element rejects the access of the terminal device to the network slice, in this case, even if the access and mobility management function network element senses that there is no PDU session established by the terminal device, senses that there is no activated user plane in the PDU session established by the terminal device, or senses that there is no data of a first service transmitting in the PDU session established by the terminal, the access and mobility management function network element determines that N is 1, determines that N is 0.5, or determines that N is 0.8.

Step 404: The access and mobility management function network element sends the quantity N to the network slice admission control function network element. Correspondingly, the network slice admission control function network element receives the quantity N.

Based on the foregoing technical solutions, in this application, the access and mobility management function network element may set and report, based on the PDU session status of the terminal device and the attribute information of the network slice, the quantity of terminal devices that access the network slice this time. When the terminal device requests to access the network slice without establishing/activating a PDU session, this can effectively avoid occupying a quota that is for the terminal device to access the network slice. In other words, this improves configuration and usage efficiency of a PDU session resource in the network slice, and improves service experience of a user.

In addition, in this embodiment, that the value of N may be a number greater than 0 and less than 1 is provided, indicating that the terminal device may not occupy a quota or occupy less configuration, so that more terminal devices that meet the attribute of the network slice access the network slice, to improve the usage efficiency of the PDU session resource.

Optionally, the method further includes step 405: The network slice admission control function network element controls the terminal device based on the quantity N.

For example, if the network slice admission control function network element monitors (alternatively, the network slice admission control function network element may determine based on another operator policy) that the quantity of terminal devices that access the network slice reaches an upper limit of a quantity of terminal devices that are allowed to access the network slice, the network slice admission control function network element may send information to an access and mobility management function network element # 2 (it should be noted that the access and mobility management function network element # 2 herein may be the same as or different from the access and mobility management function network element (denoted as the "access and mobility management function network element #1 ") in step 402), to notify the access and mobility management function network element that a maximum quantity of registered terminal devices in the network slice has been reached.

Specifically, it is assumed that the access and mobility management function network element #1 may provide services for the terminal device #1 to the terminal device #20, the access and mobility management function network element #2 may provide services for the terminal device #30 to the terminal device #60, and a mobility management function network element #3 may provide services for the terminal device #21 to the terminal device #29. It is assumed that 60 terminal devices are currently connected to the network slice, and the terminal devices are respectively the terminal device #1 to the terminal device #60. The network slice admission control function network element determines that the upper limit of the quantity of terminal devices that are allowed to access the network slice has been reached. In a possible implementation, the network slice admission control function network element may indicate the access and mobility management function network element #2 to reject access of the terminal device #49 (for example, the terminal device #49 has not established a PDU session) to the network slice. In another possible implementation, the network slice admission control function network element may alternatively notify the access and mobility management function network element #1 that the maximum quantity of registered terminal devices in the network slice has been reached, and may alternatively indicate the access and mobility management function network element #1 to reject access of the terminal device #10 (for example, the terminal device #10 has established a PDU session but has no activated user plane) to the network slice.

Optionally, the method further includes step 406: The network slice admission control function network element sends, to the access and mobility management function network element, information for triggering the access and mobility management function network element to reject the access of the terminal device to the network slice. Correspondingly, the access and mobility management function network element receives the information.

Optionally, the method further includes step 407: The access and mobility management function network element sends, to the terminal device, information for rejecting access of the terminal device to the network slice. Correspondingly, the terminal device receives the information.

Optionally, the information may further include a cause value for rejecting the access of the terminal device.

For an understanding of the "cause value" in step 407, refer to the descriptions of the "cause value" in step 207 of the method 200.

Optionally, the method further includes step 408: The terminal device determines a reason why the AMF rejects access to the network slice, may establish a PDU session, and re-requests access to the network slice.

It should be understood that the "access and mobility management function network element" in step 406 to step 408 may be understood as the "access and mobility management function network element #1" mentioned in step 405, or may be understood as the "access and mobility management function network element #2". This is not limited.

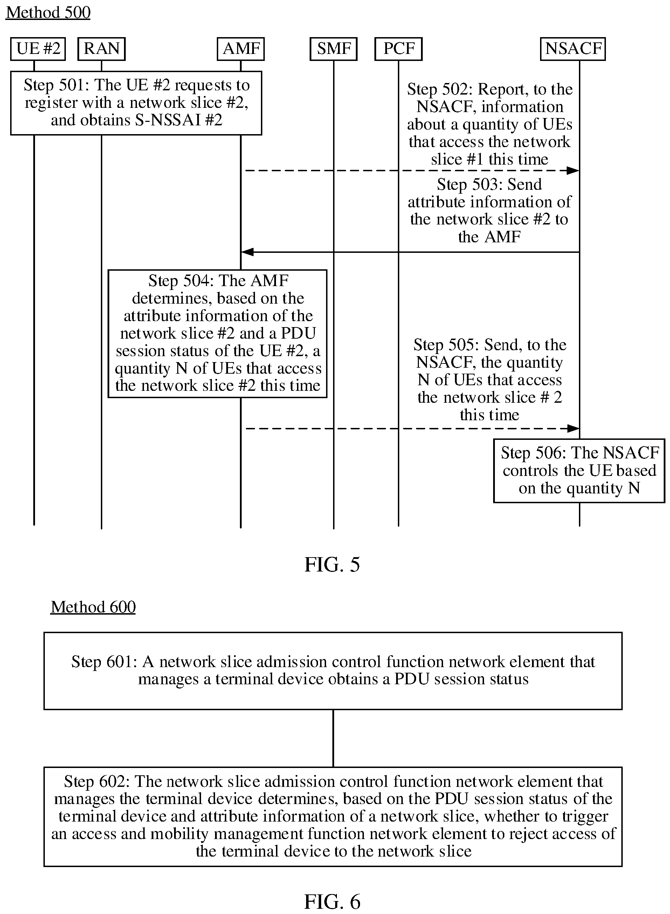

FIG. 5 is a communication method 500 according to a specific embodiment of this application. The method shows technical solutions of this application from a perspective of interaction between network elements. In the method 500, an example in which a terminal device is a UE #2 and a network slice is a network slice #2 is used for description. The method 500 includes the following steps.

Step 501: The UE #2 requests to register with the network slice #2, and obtains S-NSSAI #2.

Specifically, for an understanding of step 501, refer to the descriptions in step 301 of the method 300.

Optionally, the method further includes step 502: An AMF reports, to an NSACF, information about a quantity of UEs that access the network slice #2 this time. The corresponding NSACF receives the information.

For example, the AMF may first report, to the NSACF, a quantity M of UEs that access the network slice #2 this time. For example, the AMF may first directly report that M is 1. Alternatively, if the AMF does not report to the NSACF, it indicates that the quantity of UEs that access the network slice #2 this time is 0.

In step 501, if a follow on indication (indication information that the terminal device is to establish a PDU session) is carried when the UE#2 requests to register with the network slice #2, and even if a PDU session status of the UE#2 does not conform to an attribute of a network slice #3, the AMF may alternatively determine, based on the indication information, that M is greater than 0.

Step 503: The NSACF sends attribute information of the network slice #2 to the AMF. Correspondingly, the AMF receives the attribute information of the network slice #2.

Specifically, for an understanding of the "attribute information" in step 503, refer to the descriptions of the "attribute information" in step 401 of the method 400.

It should be noted that in this embodiment, there may be no limitation on a sequence between step 502 and step 503.

Step 504: The AMF determines, based on the attribute information of the network slice #2 and the PDU session status of the UE #2, a quantity N of UEs that access the network slice #2 this time.

It should be understood that, if 502 is performed, in this case, step 504 may be understood as that the AMF may update, based on the attribute information of the network slice #2 and the PDU session status of the UE #2, the quantity of UEs that access the network slice #2 this time again. Further, if a value of N determined by the AMF in step 504 is different from a value of M initially determined by the AMF in step 502, subsequently, the AMF sends, to the NSACF again, the quantity of UEs that access the network slice #2.

In a possible implementation, for example, the AMF may sense whether the UE#2 establishes a PDU session, the AMF may subscribe to, from an SMF, whether data is transmitted in a PDU session, or the AMF may subscribe to a start event and an end event of a service #2 from an SMF or a PCF.

Specifically, for an implementation in step 504 in which the AMF determines the quantity N of UEs that access the network slice #2 this time, refer to the descriptions of step 402 of the method 400.

Step 505: The AMF sends, to the NSACF, the quantity N of UEs that access the network slice #2 this time. The corresponding NSACF receives the quantity N of UEs that access the network slice # 2 this time.

In a possible implementation, if M reported by the AMF to the NSACF in step 501 is not equal to the quantity N that is of UEs that access the network slice #2 this time and that is determined by the AMF in step 504, the AMF may update the quantity of UEs that access the network slice #2 this time.

Step 506: The NSACF controls the terminal device based on the quantity N.

Specifically, for step 506, refer to the descriptions in step 405 of the method 400.

Optionally, the method may further include: The AMF may reject access of the UE#2 to the network slice #2, and send, to the UE#2, a cause value for rejecting access to the network slice #2. For details, refer to step 406 to step 408 of the method 400.

Based on the foregoing technical solutions, in this application, the AMF may set and report, based on the PDU session status and the attribute information of the network slice #2, the quantity of UEs that access the network slice #2 this time. When the UE requests to access the network slice #2 without establishing/activating a PDU session, this can effectively avoid occupying a quota that is for the UE to access the network slice #2. In other words, this improves configuration and usage efficiency of a PDU session resource in the network slice #2, and improves service experience of a user.

It should be noted that the foregoing network slice admission control function network element may be understood as a network slice admission control function network element that manages the terminal device.

FIG. 6 is a schematic block diagram of a communication method 600 according to this application. The method includes the following.

Step 601: A network slice admission control function network element that manages a terminal device obtains a PDU session status of the terminal device.

In a possible implementation, the network slice admission control function network element that manages the terminal device may obtain the PDU session status of the terminal device from an access and mobility management function network element.

In another possible implementation, the network slice admission control function network element that manages the terminal device obtains the PDU session status of the terminal device from a session management function network element by using the access and mobility management function network element. For example, the access and mobility management function network element may subscribe to a status of a PDU session corresponding to each network slice from the SMF (optionally, may further obtain a status of a PDU session corresponding to a terminal device in the network slice, for example, a status of a PDU session of a UE #7 corresponding to an SUPI #7 in a network slice #4). For details about the subscription process, refer to the related descriptions in step 703a of the method 700.

In still another possible implementation, the network slice admission control function network element that manages the terminal device may obtain the PDU session status of the terminal device from a network exposure function network element.

In yet another possible implementation, the network slice admission control function network element that manages the terminal device (denoted as a first network slice admission control function network element) may obtain address information of a network slice admission control function network element that manages a PDU session (denoted as a second network slice admission control function network element), and obtain a PDU session status by using the second network slice admission control function network element. For example, the network slice admission control function network element that manages the PDU session may subscribe to a status of a PDU session corresponding to each piece of S-NSSAI from the SMF (optionally, may further obtain a status of a PDU session corresponding to a terminal device in the network slice, for example, a status of a PDU session of a UE #10 corresponding to an SUPI #10 in a network slice #5).

In a possible implementation, the network slice admission control function network element that manages the terminal device may further obtain the PDU session status of the terminal device from a network data analytics function network element.

For example, the network slice admission control function network element that manages the terminal device may obtain, from the network data analytics function network element, at least one piece of the following information: slice load level (slice load level) information, service experience (Observed Service Experience) information, distribution analytics (Dispersion Analytics) information, and the like. For details, refer to a corresponding section in TS 23.288.

For another example, the network data analytics function network element may obtain a status of a PDU session corresponding to each network slice (optionally, may further obtain a status of a PDU session corresponding to a terminal device in the network slice, for example, the status of the PDU session of the UE #10 corresponding to the SUPI #10 in the network slice #5). In this case, the network slice admission control function network element that manages the terminal device may directly obtain, from the network data analytics function network element, a PDU session status of a terminal device corresponding to each SUPI.

For still another example, information that can be sent by the network data analytics function network element to the network slice admission control function network element that manages the PDU session (to a session management network element, or to an operation, administration and maintenance (operation, administration and maintenance, OAM)) includes at least one piece of the following information: network slice identifier (for example, the S-NSSAI) information, SUPI information of the terminal device, service identifier (Application ID) information, service data flow template (service data flow template) information, and the like. Therefore, the network slice admission control function network element may obtain the PDU session status of the terminal device.

It should be noted that attribute information of the network slice may be configured on the network slice admission control function network element. For the attribute information, refer to the descriptions of the attribute information in step 401 of the method 400.

Step 602: The network slice admission control function network element that manages the terminal device determines, based on the PDU session status of the terminal device and/or the attribute information of the network slice, whether to trigger the access and mobility management function network element to reject access of the terminal device to the network slice.

In a possible implementation, for example, if the PDU session status of the terminal device does not meet an attribute of the network slice, the network slice admission control function network element that manages the terminal device determines to trigger the access and mobility management function network element to reject the access of the terminal device to the network slice. In this case, the network slice admission control function network element may notify the access and mobility management control function network element that "the maximum quantity of registered terminal devices in the network slice has been reached". For another example, if the PDU session status of the terminal device meets the attribute of the network slice, the network slice admission control function network element that manages the terminal device determines not to trigger the access and mobility management function network element to reject the access of the terminal device to the network slice.

In a possible implementation, the network slice admission control function network element that manages the terminal device may update, based on a PDU session status of an accessed terminal device, a threshold of the quantity of terminal devices that are allowed to register on the network slice. For example, when there are too many terminal devices that have not established a PDU session or terminal devices that have not activated a user plane, the network slice admission control function network element may increase the threshold of the quantity of terminal devices that are allowed to register on the network slice (for example, the quantity of terminal devices that are allowed to register on the network slice is increased to 30% of a quantity of terminal devices that have not established a PDU session or a quantity of terminal devices that have not activated a user plane). Alternatively, in this case, the network slice admission control function network element that manages the terminal device may not change the threshold, however, a quantity of terminal devices that are allowed to access exceeds an original configured threshold of the quantity of terminal devices that are allowed to register on the network slice (for example, may exceed at most 30% of the quantity of terminal devices that have not established a PDU session or the quantity of terminal devices that have not activated a user plane). Further, if a quantity of actually registered terminal devices has exceeded the updated threshold, in this case, the network slice admission control function network element may notify the access and mobility management control function network element that "the maximum quantity of registered terminal devices in the network slice has been reached". In this case, it may alternatively be understood that, the network slice admission control function network element that manages the terminal device may determine, based only on the PDU session status of the terminal device, whether to trigger the access and mobility management function network element to reject the access of the terminal device to the network slice.

Specifically, if the access and mobility management control function network element requests to increase a quantity of terminal devices registered with S-NSSAI, and currently a maximum quantity of terminal devices that are allowed to register on the network slice has been reached, in this case, the network slice admission control function network element that manages the terminal device may reset the maximum quantity of terminal devices that are allowed to register on the network slice. For example, the network slice admission control function network element that manages the terminal device may check a PDU session status (for example, may be reported by the access and mobility management control function network element), and may increase, based on the reported PDU session status of each terminal device, the quantity of terminal devices that are allowed to register on the network slice to 30% of the quantity of terminal devices that have not established a PDU session or the quantity of terminal devices that have not activated a user plane. For another example, the network slice admission control function network element that manages the terminal device may maintain a counter. The counter is used to record that a quantity of actually registered users exceeds the maximum quantity of terminal devices that are allowed to register on the network slice. If the network slice admission control function network element that manages the terminal device finds, based on the counter (or according to an operator policy), that the quantity of actually registered terminal devices exceeds the maximum quantity of terminal devices that are allowed to register on the network slice, and has reached a threshold of the quantity of terminal devices that have not established a PDU session or the quantity of terminal devices that have not activated a user plane, for example, 30%, in this case, the network slice admission control function network element that manages the terminal device may determine whether to notify the access and mobility management control function network element that "the maximum quantity of registered terminal devices on the network slice has been reached".

In another possible implementation, the network slice admission control function network element that manages the terminal device may receive, from the access and mobility management function network element, indication information that the terminal device is to establish a PDU session. In this case, when the PDU session status of the terminal device does not meet the attribute of the network slice, the network slice admission control function network element that manages the terminal device determines, based on the indication information, not to trigger the access and mobility management function network element to reject the access of the terminal device to the network slice.

Optionally, the method further includes the step: The access and mobility management function network element rejects the access of the terminal device to access the network slice, and sends, to the terminal device, a cause value for rejecting the access. For details, refer to step 406 to step 408 of the method 400 for understanding.

Based on the foregoing technical solutions, in this application, the network slice admission control function network element may reject, based on the obtained PDU session status, the access of the terminal device to the network slice when determining that the PDU session status of the terminal device does not meet the attribute of the network slice. Therefore, it is ensured that no terminal device registers for a long period of time without establishing/activating a PDU session, to improve usage efficiency of a PDU session resource in the network slice, and improve service experience of user equipment.

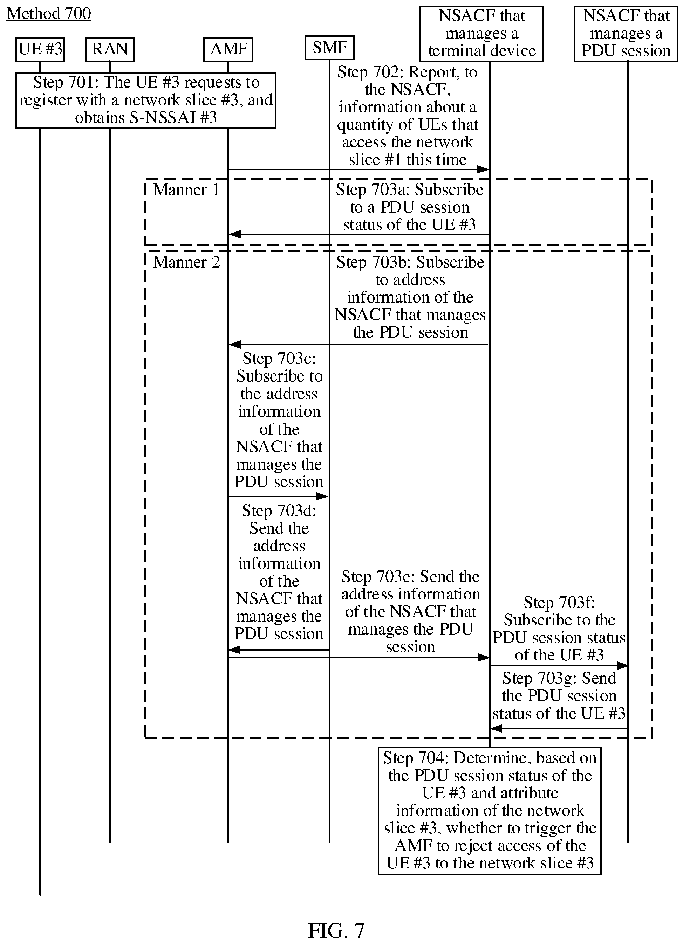

FIG. 7 is a communication method 700 according to a specific embodiment of this application. The method shows technical solutions of this application from a perspective of interaction between network elements. In the method 700, an example in which a terminal device is a UE #3 and a network slice is a network slice #3 is used for description. The method 700 includes the following steps.

Step 701: The UE #3 requests to register with the network slice #3, and obtains S-NSSAI #3.

Specifically, for an understanding of step 701, refer to the descriptions in step 301 of the method 300.

Step 702: An AMF reports, to an NSACF (namely, a first NSACF) that manages the terminal device, information about a quantity of UEs that access the network slice #3 this time. Correspondingly, the NSACF receives the information.

Optionally, the AMF may report a PDU session status of the terminal device after the NSACF subscribes to the PDU session status of the terminal device.

### Manner 1:

Step 703a: The NSACF that manages the terminal device sends subscription request information to the AMF, to subscribe to information about a PDU session status of the UE #3. Correspondingly, the AMF receives the information.

For example, the NSACF may send the subscription request information to the AMF to subscribe to the PDU session status. For example, the NSACF may subscribe to, from the AMF, whether a PDU session is established. Alternatively, the NSACF may subscribe to, from an SMF, whether there is an activated user plane. Alternatively, the NSACF may subscribe to, from an SMF or a PCF, a start event and an end event of a service #3.

Specifically, for example, the NSACF that manages the terminal device sends the subscription request information to the AMF. If the information is to subscribe to whether there is a PDU session established by the UE #3, the information may include an identifier of the UE #3. If the information is to subscribe to whether there is an activated user plane in a PDU session established by the UE #3, the information may include an identifier of the PDU session of the UE #3. If the information is to subscribe to whether there is data of a first service transmitting in a PDU session established by the UE #3, the information may include an identifier of the first service of the UE #3.

Further, in consideration of mobility of the terminal device, if an AMF that provides a service for the terminal device changes during movement of the terminal device (for example, an original AMF is denoted as an AMF #1, and a new AMF that provides a service for the terminal device after the terminal device moves is denoted as an AMF #2), in this case, in a possible implementation, the AMF #1 may send context information of the PDU session status of the terminal device to the AMF #2, to prevent the AMF #2 from repeatedly reporting the PDU session status to the NSACF when the PDU session status of the terminal device does not change. In another possible implementation, it may be predefined that, as long as the AMF that provides the service for the terminal device changes, the PDU session status of the terminal device needs to be re-reported to the NSACF.

If the AMF does not report PDU session statuses of all served UEs of the S-NSSAI, but the NSACF uses the information based on configuration requirements, in this case, the NSACF may subscribe to, from the AMF, the PDU session statuses of all served UEs of the S-NSSAI (if not previously subscribed).

It should be understood that the foregoing technical solutions may also be understood as that the NSACF that manages the terminal device sends the subscription request information to the AMF, to subscribe to PDU statuses of all terminal devices served by the AMF. In this case, the information only needs to include identification information of the AMF. In this scenario, each time the AMF reports PDU session statuses of all terminal devices served by the AMF, this may reduce signaling interaction between core network elements.

### Manner 2:

Step 703b: The NSACF that manages the terminal device sends the subscription request information to the AMF, to subscribe to address information of an NSACF (namely, a second NSACF) that manages the PDU session. Correspondingly, the AMF receives the information.

The "subscription" procedure in step 703b may be understood as follows: Before the subscription, the NSACF that manages the PDU session may not exist. Therefore, the subscription may be performed first. For example, after step 703b, the UE #3 may establish a PDU session.

Step 703c: The AMF sends, to the SMF, information about subscribing to the address of the NSACF that manages the PDU session. Correspondingly, the SMF receives the information.

Step 703d: The SMF sends, to the AMF, the address information of the NSACF that manages the PDU session. Correspondingly, the AMF receives the information.

Step 703e: The AMF sends, to the NSACF that manages the terminal device, the address information of the NSACF that manages the PDU session. Correspondingly, the NSACF that manages the terminal device receives the information.

Step 703f: The NSACF that manages the terminal device sends, based on the address information, information about subscribing to the PDU session status of the UE #3 to the NSACF that manages the PDU session. Correspondingly, the NSACF that manages the PDU session receives the information.

Step 703g: The NSACF that manages the PDU session sends status information of the PDU session of the UE #3 to the NSACF that manages the terminal device. Correspondingly, the NSACF that manages the terminal device receives the information.

Step 704: The NSACF that manages the terminal device determines, based on the PDU session status of the UE #3 and/or attribute information of the network slice, whether to trigger the AMF to reject access of the UE #3 to the network slice #3.

In a possible implementation, if the PDU session status of the UE #3 does not meet an attribute of the network slice #3, the NSACF determines to trigger the AMF to reject the access of the UE #3 to the network slice #3.

Optionally, the method further includes: To be specific, the AMF rejects the access of the UE #3 to the network slice #3, and sends, to the UE #3, a cause value for rejecting the access. For details, refer to step 406 to step 408 of the method 400 for understanding.

In another possible implementation, in step 701, if a follow on indication (indication information that the terminal device is to establish a PDU session) is carried when the UE #3 requests to register with the network slice #3, and even if the current PDU session of the UE #3 does not meet the attribute of the network slice #3, the AMF may determine, based on the indication information, not to trigger the AMF to reject the access of the UE #3 to the network slice #3.

Based on the foregoing technical solutions, in this application, the NSACF may reject, based on the obtained PDU session status, the access of the UE #3 to the network slice #3 when determining that the PDU session status of the UE #3 does not meet the attribute of the network slice #3. Therefore, it is ensured that no terminal device registers for a long period of time without establishing/activating a PDU session, to improve usage efficiency of a PDU session resource in the network slice, and improve service experience of user equipment.

It may be understood that the examples in FIG. 2 to FIG. 7 in embodiments of this application are merely intended to help a person skilled in the art understand embodiments of this application, and are not intended to limit embodiments of this application to the specific scenarios shown in the examples. A person skilled in the art can apparently make various equivalent modifications or changes based on the examples in FIG. 2 to FIG. 7, and such modifications or changes also fall within the scope of embodiments of this application.

It may be further understood that, in some scenarios, some optional features in embodiments of this application may be independently implemented without depending on another feature, or may be combined with another feature in some scenarios. This is not limited.

It may be further understood that embodiments described in this application may be independent solutions, or may be combined based on internal logic. All these solutions fall within the protection scope of this application. In addition, explanations or descriptions of terms in embodiments of this application may be mutually referenced or explained in embodiments. This is not limited.

It may be further understood that, values of various numerical sequence numbers in embodiments of this application do not mean execution sequences, are merely distinguished for ease of description, and should not be construed as any limitation on the implementation processes of embodiments of this application. For example, in the method 500, there may be no limitation on a sequence between step 502 and step 503. That is, step 502 may be performed first, or step 503 may be performed first.

It should be understood that "predefine" in this application may be understood as "define", "predefine", "store", "pre-store", "pre-negotiate", "pre-configure", "build into", or "pre-burn".

It may be understood that, in this application, both "when..." and "if" mean that an apparatus performs corresponding processing in an objective situation, and are not intended to limit time. The terms do not mean that the apparatus is required to have a determining action during implementation, and do not mean any other limitation.

It may be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The foregoing mainly describes the solutions provided in embodiments of this application from a perspective of interaction between nodes. It may be understood that, to implement the foregoing functions, each node, for example, the access and mobility management function network element, the terminal device, and the network slice admission control function network element, includes a corresponding hardware structure and/or software module for performing each function. A person skilled in the art may be aware that, in combination with the examples described in embodiments disclosed in this specification, units and algorithm steps can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this embodiment of this application, function module division may be performed on the access and mobility management function network element and each related core network element based on the foregoing method example. For example, each function module may be obtained through division based on each corresponding function, or two or more functions may be integrated into one processing module. The foregoing integrated module may be implemented in a form of hardware, or may be implemented in a form of a software function module. It should be noted that, in embodiments of this application, module division is an example, and is merely a logical function division. In an actual implementation, another division manner may be used. An example in which each functional module is obtained through division based on each corresponding function is used below for description.

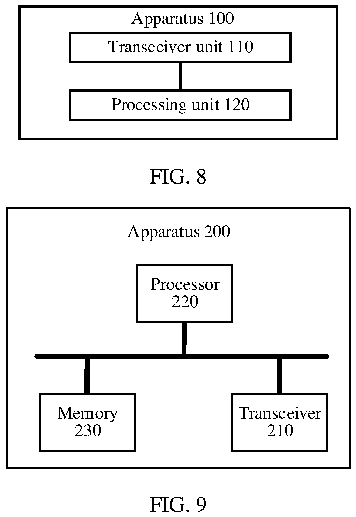

FIG. 8 is a schematic block diagram of a communication apparatus 100 according to an embodiment of this application. As shown in the figure, the apparatus 100 may include a transceiver unit 110 and a processing unit 120.

In a possible design, the apparatus 100 may be the access and mobility management function network element in the foregoing method embodiments, or may be a chip configured to implement a function of the access and mobility management function network element in the foregoing method embodiments. It should be understood that the apparatus 100 may correspond to the access and mobility management function network element in the method 200 to the method 700 in embodiments of this application, and the apparatus 100 may perform the steps corresponding to the access and mobility management function network element in the method 200 to the method 700 in embodiments of this application.

In an implementation, the processing unit is configured to determine first time. If a protocol data unit PDU session status of a terminal device does not meet a first condition of a network slice after the first time expires, the processing unit is configured to reject access of the terminal device to the network slice.

In an implementation, the processing unit is configured to obtain information indicating the first time.

In an implementation, the processing unit is configured to obtain attribute information of the network slice, and the processing unit is configured to determine the first condition based on the attribute information.

In an implementation, before the processing unit rejects the access of the terminal device to the network slice, the transceiver unit is configured to send the first time to the terminal device.

In an implementation, the transceiver unit is configured to send, to the terminal device, a cause value indicating why the access and mobility management function network element rejects the access of the terminal device to the network slice.

In an implementation, the transceiver unit is configured to receive, from the terminal device, indication information that the terminal device is to establish a PDU session. The processing unit is configured to determine the first time based on the indication information.

In an implementation, the processing unit indicates the transceiver unit to subscribe to a start event of a first service from a session management function network element or a policy control management network element.

In a possible implementation, the processing unit is further configured to determine the attribute information of the network slice. The processing unit is configured to determine, based on the attribute information of the network slice and the protocol data unit PDU session status of the terminal device, a quantity N of terminal devices that access the network slice this time. N is greater than or equal to 0, and is less than or equal to 1. The transceiver unit is configured to send the quantity N to a network slice admission control function network element.

In a possible implementation, that the processing unit is configured to determine, based on the attribute information of the network slice and the PDU session status of the terminal device, a quantity N of terminal devices that access the network slice includes: If the processing unit determines that the PDU session status of the terminal device does not conform to an attribute of the network slice, the processing unit determines that N is less than 1.

In a possible implementation, the transceiver unit is configured to receive, from the terminal device, the indication information that the terminal device is to establish a PDU session. That the processing unit is configured to determine, based on the attribute information of the network slice and the PDU session status of the terminal device, a quantity N of terminal devices that access the network slice includes: The processing unit is configured to determine, based on the attribute information of the network slice, the PDU session status of the terminal device, and the indication information, that N is greater than 0.

In a possible design, the apparatus 100 may be the network slice admission control function network element in the foregoing method embodiments, or may be a chip configured to implement a function of the network slice admission control function network element in the foregoing method embodiments. It should be understood that the apparatus 100 may correspond to the network slice admission control function network element in the method 200 to the method 700 in embodiments of this application, and the apparatus 100 may perform the steps corresponding to the network slice admission control function network element in the method 200 to the method 700 in embodiments of this application.

In a possible implementation, the processing unit is configured to obtain the protocol data unit PDU session status of the terminal device. The attribute information of the network slice is configured on the apparatus. The processing unit is configured to determine, based on the PDU session status of the terminal device and the attribute information of the network slice, whether to trigger the access and mobility management function network element to reject the access of the terminal device to the network slice.

In a possible implementation, that the processing unit is configured to obtain the PDU session status of the terminal device includes: The processing unit is configured to obtain the PDU session status of the terminal device from the access and mobility management function network element; the processing unit obtains the PDU session status of the terminal device from the session management function network element by using the access and mobility management function network element; or the processing unit is configured to obtain the PDU session status of the terminal device from a network exposure function network element.

In a possible implementation, the processing unit is a first processing unit. That the processing unit is configured to obtain the PDU session status of the terminal device includes: The first processing unit is configured to obtain address information of a second processing unit. The first processing unit is configured to manage a quantity of terminal devices, and the second processing unit is configured to manage a quantity of PDU sessions. The first processing unit is configured to indicate, based on the address information of the second processing unit, the transceiver unit to request, from the second processing unit network element, to obtain the PDU session status of the terminal device. The transceiver unit is configured to receive the PDU session status of the terminal device from the second processing unit.

In a possible implementation, that the first processing unit is configured to obtain address information of a second processing unit includes: The transceiver unit is configured to request or subscribe to the address information of the second processing unit from the access and mobility management function network element. The transceiver unit is configured to receive the address information of the second processing unit from the access and mobility management function network element.

In a possible implementation, that the processing unit is configured to determine, based on the PDU session status of the terminal device and the attribute information of the network slice, whether to trigger the access and mobility management function network element to reject the access of the terminal device to the network slice includes: When the PDU session status of the terminal device does not meet the attribute of the network slice, the processing unit is configured to determine to trigger the access and mobility management function network element to reject the access of the terminal device to the network slice.

In a possible implementation, the transceiver unit is configured to receive, from the access and mobility management function network element, the indication information that the terminal device is to establish the PDU session. That the processing unit is configured to determine, based on the PDU session status of the terminal device and the attribute information of the network slice, whether to trigger the access and mobility management function network element to reject the access of the terminal device to the network slice includes: When the PDU session status of the terminal device does not meet the attribute of the network slice, the processing unit is configured to determine, based on the indication information, not to trigger the access and mobility management function network element to reject the access of the terminal device to the network slice.

In a possible design, the apparatus 100 may be the terminal device in the foregoing method embodiments, or may be a chip configured to implement a function of the terminal device in the foregoing method embodiments. It should be understood that the apparatus 100 may correspond to the terminal device in the method 200 to the method 700 in embodiments of this application, and the apparatus 100 may perform the steps corresponding to the terminal device in the method 200 to the method 700 in embodiments of this application.

In a possible implementation, the transceiver unit is configured to send, to the access and mobility management function network element, information indicating that the apparatus requests to access the network slice. The transceiver unit is configured to receive first time from the access and mobility management function network element. If a protocol data unit PDU session status of the apparatus does not meet the first condition after the first time expires, the transceiver unit is configured to receive, from the access and mobility management function network element, information indicating that the access to the network slice is rejected.

In a possible implementation, the transceiver unit is configured to send, to the access and mobility management function network element, indication information that the apparatus is to establish a PDU session. The indication information is used by the access and mobility management function network element to determine the first time.

In a possible implementation, the transceiver unit is configured to send, to the access and mobility management function network element, information about the network slice that the apparatus requests to access. The transceiver unit is configured to send, to the access and mobility management function network element, indication information that the apparatus is to establish a PDU session for the network slice. The indication information is used by the access and mobility management function network element to determine the quantity N of terminal devices that access the network slice, where N is greater than 0; or the indication information is used by the network slice admission control function network element to determine not to trigger the access and mobility management function network element to reject access of the apparatus to the network slice.

It should be further understood that the apparatus 100 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 100 may be specifically the first terminal device in the foregoing embodiments, and may be configured to perform the procedures and/or the steps corresponding to the first terminal device in the foregoing method embodiments. Alternatively, the apparatus 100 may be specifically the second terminal device in the foregoing embodiments, and may be configured to perform the procedures and/or the steps corresponding to the second terminal device in the foregoing method embodiments. To avoid repetition, details are not described herein.

The apparatus 100 in the foregoing solutions has a function of implementing corresponding steps performed by the radio access network device in the foregoing methods. Alternatively, the apparatus 100 in the foregoing solutions has a function of implementing corresponding steps performed by the access and mobility management function network element, the terminal device, and the network slice admission control function network element in the foregoing methods. The function may be implemented by hardware, or may be implemented by hardware executing corresponding software. The hardware or software includes one or more modules corresponding to the foregoing functions. For example, the transceiver unit may be replaced with a transceiver (for example, a sending unit in the transceiver unit may be replaced with a transmitter, and a receiving unit in the transceiver unit may be replaced with a receiver), and another unit such as the processing unit may be replaced with a processor, to separately perform sending and receiving operations and a related processing operation in the method embodiments.

In addition, the transceiver unit 110 may alternatively be a transceiver circuit (for example, may include a receiving circuit and a sending circuit), and the processing unit may be a processing circuit.

It should be noted that the apparatus in FIG. 8 may be the network element or device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 9 is a schematic block diagram of a communication apparatus 200 according to an embodiment of this application. As shown in the figure, the apparatus 200 includes at least one processor 220. The processor 220 is coupled to a memory, and is configured to execute instructions stored in the memory, to send a signal and/or receive a signal. Optionally, the device 200 further includes a memory 230, configured to store instructions. Optionally, the device 200 further includes a transceiver 210, and the processor 220 controls the transceiver 210 to send a signal and/or receive a signal.

It should be understood that the processor 220 and the memory 230 may form a processing device, and the processor 220 is configured to execute program code stored in the memory 230 to implement the foregoing functions. During specific implementation, the memory 230 may alternatively be integrated into the processor 220, or may be independent of the processor 220.

It should be further understood that the transceiver 210 may include a transceiver (or referred to as a receive machine) and a transmitter (or referred to as a transmit machine). The transceiver may further include an antenna. There may be one or more antennas. Alternatively, the transceiver 210 may be a communication interface or an interface circuit.

Specifically, the transceiver 210 in the device 200 may correspond to the transceiver unit 110 in the device 100, and the processor 220 in the device 200 may correspond to the processing unit 120 in the device 200.

In a solution, the apparatus 200 is configured to implement the operations performed by the radio access network device in the foregoing method embodiments.

For example, the processor 220 is configured to execute a computer program or instructions stored in the memory 230, to implement the related operations of the access and mobility management function network element in the foregoing method embodiments, for example, the method performed by the access and mobility management function network element in any one of embodiments shown in FIG. 2 to FIG. 7.

In a solution, the apparatus 200 is configured to implement the operations performed by the terminal device in the foregoing method embodiments.

For example, the processor 220 is configured to execute the computer program or the instructions stored in the memory 230, to implement the related operations of the terminal device in the foregoing method embodiments, for example, the method performed by the terminal device in any one of embodiments shown in FIG. 2 to FIG. 7.

In a solution, the apparatus 200 is configured to implement the operations performed by the network slice admission control function network element in the foregoing method embodiments.

For example, the processor 220 is configured to execute the computer program or the instructions stored in the memory 230, to implement the related operations of the network slice admission control function network element in the foregoing method embodiments, for example, the method performed by the network slice admission control function network element in any one of embodiments shown in FIG. 2 to FIG. 7.

It should be understood that a specific process of performing the foregoing corresponding steps by each transceiver and each processor has been described in detail in the foregoing method embodiments. For brevity, details are not described herein again.

In an implementation process, the steps of the foregoing method may be implemented by using a hardware integrated logical circuit in the processor, or by using instructions in a form of software. The steps of the method disclosed with reference to embodiments of this application may be directly executed and accomplished by using a hardware processor, or may be executed and accomplished by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein.

It should be noted that, the processor in embodiments of this application may be an integrated circuit chip, and has a signal processing capability. In an implementation process, the steps in the foregoing method embodiments may be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the method disclosed with reference to embodiments of this application may be directly executed and accomplished by using a hardware decoding processor, or may be executed and accomplished by using a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory in the system and the method described in this specification is intended to include, but not limited to, these memories and any memory of another proper type.

According to the method provided in embodiments of this application, this application further provides a computer program product. The computer program product stores computer program code. When the computer program code is run on a computer, the computer is enabled to perform the method performed by the access and mobility management function network element in any one of embodiments in the method 200 to the method 700.

For example, when the computer program code is executed by a computer, the computer is enabled to implement the method performed by the terminal device in the foregoing embodiments in the method 200 to the method 700.

For another example, when the computer program code is executed by a computer, the computer is enabled to implement the method performed by the network slice admission control function network element in the foregoing embodiments in the method 200 to the method 700.

According to the method provided in embodiments of this application, this application further provides a computer-readable medium. The computer-readable medium stores program code. When the program code is run on a computer, the computer is enabled to perform the method performed by the access and mobility management function network element, the terminal device, and the network slice admission control function network element in the foregoing embodiments.

According to the method provided in embodiments of this application, this application further provides a communication system, including an access and mobility management function network element and a terminal device. The access and mobility management function network element is configured to perform the method performed by the access and mobility management function network element in any one of embodiments in the method 200 to 700, and the terminal device is configured to perform the method performed by the terminal device in any one of embodiments in the method 200 to 700.

Optionally, the communication system may further include a network slice admission control function network element. The network slice admission control function network element is configured to perform the method performed by the network slice admission control function network element in any one of embodiments in the method 200 to 700.

According to the method provided in embodiments of this application, this application further provides a communication system, including a network slice admission control function network element and a terminal device. The network slice admission control function network element is: configured to perform the method performed by the network slice admission control function network element in any one of embodiments in the method 200 to 700, and the terminal device is configured to perform the method performed by the terminal device in any one of embodiments in the method 200 to 700.

Optionally, the communication system may further include an access and mobility management function network element. The access and mobility management function network element is configured to perform the method performed by the access and mobility management function network element in any one of embodiments in the method 200 to 700.

For explanations and beneficial effects of related content of any one of the apparatuses provided above, refer to the corresponding method embodiments provided above. Details are not described herein again.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid state disc (solid state disc, SSD)), or the like.

In the foregoing apparatus embodiments, corresponding modules or units perform corresponding steps. For example, a transceiver unit (transceiver) performs a receiving or sending step in the method embodiments, and other steps except sending and receiving may be performed by a processing unit (processor). For a function of a specific unit, refer to a corresponding method embodiment. There may be one or more processors.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both an application running on a computing device and the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a specific working process of the foregoing system, device, and unit, refer to a corresponding process in the foregoing method embodiments, and details are not described herein again.

In the several embodiments provided in this application, it should be understood that the disclosed system, device, and method may be implemented in other manners. For example, the described device embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining, by an access and mobility management function network element, first time; and
when a protocol data unit PDU session status of a terminal device does not meet a first condition of a network slice after the first time expires, rejecting, by the access and mobility management function network element, access of the terminal device to the network slice, wherein the first condition comprises at least one of the following:
there is a PDU session established by the terminal device for the network slice;
there is an activated user plane in a PDU session established by the terminal device for the network slice; or
there is data of a first service transmitting in a PDU session established by the terminal device for the network slice.

2. The method according to claim 1, wherein the method further comprises: obtaining, by the access and mobility management function network element, information indicating the first time.

3. The method according to claim 1 or 2, wherein the method further comprises:
obtaining, by the access and mobility management function network element, attribute information of the network slice; and
determining, by the access and mobility management function network element, the first condition based on the attribute information.

4. The method according to claim 3, wherein the attribute information comprises at least one of the following:
after the first time expires, if there is no PDU session established by the terminal device for the network slice, rejecting, by the access and mobility management function network element, the access of the terminal device to the network slice;
after the first time expires, if there is no activated user plane in a PDU session established by the terminal device for the network slice, rejecting, by the access and mobility management function network element, the access of the terminal device to the network slice; or
after the first time expires, if there is no data of the first service transmitting in a PDU session established by the terminal device for the network slice, rejecting, by the access and mobility management function network element, the access of the terminal device to the network slice.

5. The method according to any one of claims 1 to 4, wherein the method further comprises: before the access and mobility management function network element rejects the access of the terminal device to the network slice, sending, by the access and mobility management function network element, the first time to the terminal device.

6. The method according to any one of claims 1 to 5, wherein the method further comprises:
sending, by the access and mobility management function network element to the terminal device, a cause value indicating why the access and mobility management function network element rejects the access of the terminal device to the network slice, wherein the cause value comprises at least one of the following:
there is no PDU session established by the terminal device for the network slice;
there is no activated user plane in a PDU session established by the terminal device for the network slice; or
there is no data of the first service transmitting in a PDU session established by the terminal device for the network slice.

7. The method according to any one of claims 1 to 5, wherein the method further comprises:
receiving, by the access and mobility management function network element from the terminal device, indication information that the terminal device is to establish a PDU session; and
determining, by the access and mobility management function network element, the first time based on the indication information.

8. The method according to any one of claims 1 to 7, wherein the method further comprises:
subscribing, by the access and mobility management function network element to a session management function network element or a policy control management network element, to a start event of the first service.

9. A communication method, comprising:
sending, by a terminal device to an access and mobility management function network element, information for requesting to access a network slice;
receiving, by the terminal device, first time from the access and mobility management function network element; and
when a protocol data unit PDU session status of the terminal device does not meet a first condition after the first time expires, receiving, by the terminal device from the access and mobility management function network element, information indicating that access to the network slice is rejected, wherein the first condition comprises at least one of the following:
there is a PDU session established by the terminal device for the network slice;
there is an activated user plane in a PDU session established by the terminal device for the network slice; or
there is data of a first service transmitting in a PDU session established by the terminal device for the network slice.

10. The method according to claim 9, wherein the method further comprises:
sending, by the terminal device to the access and mobility management function network element, indication information that the terminal device is to establish a PDU session, wherein the indication information is used by the access and mobility management function network element to determine the first time.

11. A communication method, comprising:
determining, by an access and mobility management function network element, attribute information of a network slice;
determining, by the access and mobility management function network element based on the attribute information of the network slice and a protocol data unit PDU session status of aterminal device, a quantity N of terminal devices that access the network slice this time, wherein N is greater than or equal to 0, and is less than or equal to 1; and
sending, by the access and mobility management function network element, the quantity N to a network slice admission control function network element, wherein
the attribute information of the network slice comprises at least one of the following:
if there is no PDU session established by the terminal device for the network slice, the access and mobility management function network element rejects access of the terminal device to the network slice;
if there is no activated user plane in a PDU session established by the terminal device for the network slice, the access and mobility management function network element rejects access of the terminal device to the network slice; or
if there is no data of a first service transmitting in a PDU session established by the terminal device for the network slice, the access and mobility management function network element rejects access of the terminal device to the network slice.

12. The method according to claim 11, wherein the determining, by the access and mobility management function network element based on the attribute information of the network slice and a PDU session status of a terminal device, a quantity N of terminal devices that access the network slice comprises:
if the access and mobility management function network element determines that the PDU session status of the terminal device does not conform to an attribute of the network slice, determining, by the AMF, that N is less than 1.

13. The method according to claim 11 or 12, wherein the method further comprises:
receiving, by the access and mobility management function network element from the terminal device, indication information that the terminal device is to establish a PDU session, wherein
the determining, by the access and mobility management function network element based on the attribute information of the network slice and a PDU session status of a terminal device, a quantity N of terminal devices that access the network slice comprises:
determining, by the access and mobility management function network element based on the attribute information of the network slice, the PDU session status of the terminal device, and the indication information, that N is greater than 0.

14. The method according to any one of claims 11 to 13, wherein the method further comprises:
subscribing, by the access and mobility management function network element to a session management function network element or a policy control management network element, to a start event of the first service.

15. A communication method, comprising:
obtaining, by a network slice admission control function network element, a protocol data unit PDU session status of a terminal device, wherein attribute information of a network slice is configured on the network slice admission control function network element; and
determining, by the network slice admission control function network element based on the PDU session status of the terminal device and/or the attribute information of the network slice, whether to trigger an access and mobility management function network element to reject access of the terminal device to the network slice, wherein
the attribute information of the network slice comprises at least one of the following:
if there is no PDU session established by the terminal device for the network slice, the access and mobility management function network element rejects the access of the terminal device to the network slice;
if there is no activated user plane in a PDU session established by the terminal device for the network slice, the access and mobility management function network element rejects the access of the terminal device to the network slice; or
if there is no data of a first service transmitting in a PDU session established by the terminal device for the network slice, the access and mobility management function network element rejects the access of the terminal device to the network slice.

16. The method according to claim 15, wherein the obtaining, by a network slice admission control function network element, a PDU session status of a terminal device comprises:
obtaining, by the network slice admission control function network element, the PDU session status of the terminal device from the access and mobility management function network element;
obtaining, by the network slice admission control function network element, the PDU session status of the terminal device from a session management function network element via the access and mobility management function network element; or
obtaining, by the network slice admission control function network element, the PDU session status of the terminal device from a network exposure function network element.

17. The method according to claim 15, wherein the network slice admission control function network element is a first network slice admission control function network element, and the obtaining, by a network slice admission control function network element, a PDU session status of a terminal device comprises:
obtaining, by the first network slice admission control function network element, address information of a second network slice admission control function network element, wherein the first network slice admission control function network element is configured to manage a quantity of terminal devices, and the second network slice admission control function network element is configured to manage a quantity of PDU sessions;
requesting, by the first network slice admission control function network element, to obtain the PDU session status of the terminal device from the second network slice admission control function network element based on the address information of the second network slice admission control function network element; and
receiving, by the first network slice admission control function network element, the PDU session status of the terminal device from the second network slice admission control function network element.

18. The method according to claim 17, wherein the obtaining, by the first network slice admission control function network element, address information of a second network slice admission control function network element comprises:
requesting or subscribing to, by the first network slice admission control function network element, the address information of the second network slice admission control function network element from the access and mobility management function network element; and
receiving, by the first network slice admission control function network element, the address information of the second network slice admission control function network element from the access and mobility management function network element.

19. The method according to any one of claims 15 to 18, wherein the determining, by the network slice admission control function network element based on the PDU session status of the terminal device and the attribute information of the network slice, whether to trigger an access and mobility management function network element to reject access of the terminal device to the network slice comprises:
when the PDU session status of the terminal device does not meet an attribute of the network slice, determining, by the network slice admission control function network element, to trigger the access and mobility management function network element to reject the access of the terminal device to the network slice.

20. The method according to any one of claims 15 to 18, wherein the method further comprises:
receiving, by the network slice admission control function network element from the access and mobility management function network element, indication information that the terminal device is to establish a PDU session; and
the determining, by the network slice admission control function network element based on the PDU session status of the terminal device and the attribute information of the network slice, whether to trigger an access and mobility management function network element to reject access of the terminal device to the network slice comprises:
when the PDU session status of the terminal device does not meet an attribute of the network slice, determining, by the network slice admission control function network element based on the indication information, not to trigger the access and mobility management function network element to reject the access of the terminal device to the network slice.

21. A communication method, comprising:
sending, by a terminal device to an access and mobility management function network element, information about a network slice that the terminal device requests to access; and
sending, by the terminal device to the access and mobility management function network element, indication information that the terminal device is to establish a PDU session for the network slice, wherein
the indication information is used by the access and mobility management function network element to determine a quantity N of terminal devices that access the network slice, wherein N is greater than 0; or the indication information is used by a network slice admission control function network element to determine not to trigger the access and mobility management function network element to reject access of the terminal device to the network slice.

22. A computer-readable storage medium, wherein the computer-readable storage medium stores a computer program, and when the computer program is run on a computer, the computer is enabled to perform the method according to any one of claims 1 to 21.

23. A computer program product, wherein the computer program product comprises instructions for performing the method according to any one of claims 1 to 21.

24. A communication system, comprising an access and mobility management function network element and a terminal device, wherein
the access and mobility management function network element is configured to perform the method according to any one of claims 1 to 8; and
the terminal device is configured to perform the method according to claim 9 or 10.

25. A communication system, comprising an access and mobility management function network element and a terminal device, wherein
the access and mobility management function network element is configured to perform the method according to any one of claims 11 to 14; and
the terminal device is configured to send, to the access and mobility management function network element, information about a network slice that the terminal device requests to access; and the terminal device sends, to the access and mobility management function network element, indication information that the terminal device is to establish a PDU session for the network slice, wherein the indication information is used by the access and mobility management function network element to determine a quantity N of terminal devices that access the network slice, wherein N is greater than 0.

26. A communication system, comprising a network slice admission control function network element and a terminal device, wherein
the network slice admission control function network element is configured to perform the method according to any one of claims 15 to 20; and
the terminal device is configured to send, to the access and mobility management function network element, information about a network slice that the terminal device requests to access; and the terminal device sends, to the access and mobility management function network element, indication information that the terminal device is to establish a PDU session for the network slice, wherein the indication information is used by the network slice admission control function network element to determine not to trigger the access and mobility management function network element to reject access of the terminal device to the network slice.
